(19) Europäisches Patentamt / European Patent Office / Office européen des brevets

(11) **EP 4 414 152 B1**

(12)

# EUROPEAN PATENT SPECIFICATION

(45) Date of publication and mention
of the grant of the patent:
**02.07.2025 Bulletin 2025/27**

(21) Application number: **22878405.4**

(22) Date of filing: **28.09.2022**

(51) International Patent Classification (IPC):
*B29C 43/54* (2006.01)     *B29C 43/34* (2006.01)
*B29C 70/10* (2006.01)     *B29C 70/42* (2006.01)
*B29K 101/12* (2006.01)    *B29K 105/12* (2006.01)
*B29C 70/08* (2006.01)     *B32B 5/26* (2006.01)
*B29C 70/34* (2006.01)     *B29B 11/16* (2006.01)
*B29C 43/20* (2006.01)     *B29C 70/46* (2006.01)
*B29C 70/12* (2006.01)

(52) Cooperative Patent Classification (CPC):
**B29C 70/10; B29B 11/16; B29C 43/003;
B29C 70/08; B29C 70/12; B29C 70/34;
B29C 70/345; B29C 70/46; B32B 5/26;
D04H 1/4218; D04H 1/4242; D04H 1/593;
D04H 1/72;** B29C 43/203; B29K 2995/0089

(86) International application number:
**PCT/JP2022/036282**

(87) International publication number:
**WO 2023/058535 (13.04.2023 Gazette 2023/15)**

(54) **MOLDING MATERIAL CONTAINING CARBON FIBERS AND GLASS FIBERS AND METHOD FOR MANUFACTURING MOLDED BODY BY COLD-PRESSING SAME**

FORMMATERIAL MIT KOHLENSTOFFFASERN UND GLASFASERN UND VERFAHREN ZUR HERSTELLUNG EINES FORMKÖRPERS DURCH KALTPRESSEN DAVON

MATÉRIAU DE MOULAGE CONTENANT DES FIBRES DE CARBONE ET DES FIBRES DE VERRE ET PROCÉDÉ DE FABRICATION D'UN CORPS MOULÉ PAR PRESSAGE À FROID DE CE DERNIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.10.2021 JP 2021163769**

(43) Date of publication of application:
**14.08.2024 Bulletin 2024/33**

(73) Proprietor: **Teijin Limited**
**Osaka-shi, Osaka 530-0005 (JP)**

(72) Inventors:
• **KONAGAI, Yuhei**
**Osaka-shi, Osaka 530-0005 (JP)**
• **HUA, Guofei**
**Osaka-shi, Osaka 530-0005 (JP)**
• **SUZUKI, Kentaro**
**Osaka-shi, Osaka 530-0005 (JP)**
• **NAKAMOTO, Daishiro**
**Osaka-shi, Osaka 530-0005 (JP)**

(74) Representative: **Epping - Hermann - Fischer
Patentanwaltsgesellschaft mbH
Schloßschmidstraße 5
80639 München (DE)**

(56) References cited:
**WO-A1-2019/235299      WO-A1-2021/153366
WO-A1-2021/153366      WO-A1-2022/097438
JP-A- H 059 301      JP-A- H09 277 420
US-A1- 2020 282 670      US-A1- 2021 162 638
US-A1- 2022 410 443**

**Description**

TECHNICAL FIELD

The present invention relates to a molding material X containing carbon fibers, glass fibers and a matrix resin, the molding material X having a specific shrinkage. Further, the present invention relates to a method of manufacturing a molded body by laminating the molding material X and a molding material Y having a specific shrinkage ratio and cold-pressing the laminated material X.

BACKGROUND ART

In recent years, molded bodies are excellent in mechanical properties and are attracting attention as structural members of automobiles and the like.

Patent Literature 1 discloses a molding material in which glass fibers and carbon fibers are mixed, and Patent Literature 1 aims to exhibit physical properties equivalent to those of a molding material (SMC, sheet molding compound) composed of a mixed product of glass fibers and carbon fibers made of only carbon fibers.

Patent Literatures 1 and 2 describe a molded body formed by laminating and molding a thermoplastic resin layer reinforced by glass fibers and a thermoplastic resin reinforced with carbon fibers. Patent Literatures 3 and 4 describe a wave impact absorbing member using a thermoplastic resin reinforced with carbon fibers. Patent Literature 6 discloses a method for producing a molded body.

CITATION LIST

PATENT LITERATURE

Patent Literature 1: JP 2014-019707 A
Patent Literature 2: JP 2018-43412 A
Patent Literature 3: WO 2018/052080 A1
Patent Literature 4: US Patent Publication 9,650,003
Patent Literature 5: US Patent Publication 9,592,853
Patent Literature 6: WO2021/153366A1

SUMMARY OF INVENTION

TECHNICAL PROBLEM

However, the invention described in Patent Literature 1 is an invention intending to mix carbon fibers and glass fibers and exhibit the same physical properties as an SMC composed only of carbon fibers even at low cost, and a problem of warpage when a molding material is laminated and press-molded has not been studied at all.

In addition, since the material described in Patent Literature 2 has a laminated structure in which a glass fiber composite material is sandwiched by carbon fiber composite materials, a composite material containing only carbon fibers is disposed in both surface layers. In this case, since the fracture strain of the carbon fiber composite material in both surface layers is small, the layer on the side opposite to the impact receiving side is fractured when subjected to an impact, and cracks are easily generated. Although the glass fiber composite material present in a central layer has a large fracture strain, the glass fiber composite material present in the inside of the molded body does not contribute to prevention of cracks when the molded body is subjected to an impact. In the molded body described in Patent Literature 2, although the glass fiber composite material and the carbon fiber composite material are laminated in two layers, a problem of warpage occurs due to a difference between linear expansion coefficients of the glass fiber composite material and the carbon fiber composite material. When the warpage occurs, it is difficult to assemble, for example, an automobile in combination with other components. In the inventions described in Patent Literatures 4 and 5, the molded body is formed of only the carbon fiber composite material, so that the problem of warpage is not recognized.

Accordingly, an object of the present invention is to provide a method for producing a molded body by which high impact resistance of the molded body is satisfied and the problem of "warpage" of the molded body is solved.

SOLUTION TO PROBLEM

In order to solve the above problems, the present invention provides the following means.
1. A method for producing a molded body by laminating and cold-pressing a molding material X and a molding material Y, in which:

the molding material X contains discontinuous carbon fibers Cx, discontinuous glass fibers Gx, and a matrix resin Rx, the carbon fibers Cx containing carbon fibers Cx1 having a fiber width of less than 0.3 mm and carbon fibers Cx2 having a fiber width of 0.3 mm or more and 3.0 mm or less;
a volume ratio of the carbon fibers Cx2 to the carbon fibers Cx is 10 Vol% or more and less than 99 Vol%;
a volume ratio of the carbon fibers Cx / the glass fibers Gx is 0.1 or more and 1.5 or less;
an average molding shrinkage (X) in an in-plane direction of the molding material X satisfies the following formula (1);
the molding material Y contains discontinuous carbon fibers Cy and/or glass fibers Gy, and a matrix resin Ry; and
an average molding shrinkage (Y) of the molding material Y in an in-plane direction satisfies the following formula (2).

$$\text{Formula (1): Average molding shrinkage (X)} \leq 0.12\%$$

$$\text{Formula (2): } 0.1 < \text{average molding shrinkage (Y)/average molding shrinkage (X)} < 1.5$$

2. The method for producing a molded body according to 1 above, in which a weight average fiber length of the carbon fibers Cx is 1 mm or more and 100 mm or less, and a weight average fiber length of the glass fibers Gx is 1 mm or more and 100 mm or less.

3. The method for producing a molded body according to 1 or 2 above, in which the molding material X is a molding material in which the carbon fibers Cx and the glass fibers Gx are mixed in a same layer.

4. The method for producing a molded body according to any one of 1 to 3 above, wherein at least one outermost layer when the molded body is formed contains the glass fibers Gx.

5. The method for producing a molded body according to any one of 1 to 4, in which the molding material X is a laminated body Px in which a layer Xc and a layer Xg are laminated, the layer Xc contains the carbon fibers Cx, and the layer Xg contains the glass fibers Gx.

6. The method for producing a molded body according to 5 above, in which at least one outermost layer when the molded body is formed is the layer Xg.

7. The method for producing a molded body according to any one of 1 to 6, in which the molding material Y is a laminated body Py in which a layer Yc and a layer Ycg are laminated, the layer Yc contains discontinuous carbon fibers Cyc, and the layer Ycg contains carbon fibers Cycg and/or the glass fibers Gy.

8. The method for producing a molded body according to 7 above, in which at least one outermost layer when the molded body is formed is the layer Yc.

9. The method for producing a molded body according to 8 above, in which the laminated body Py has a three-layer structure of the layer Yc/the layer Ycg/the layer Yc.

10. The method for producing a molded body according to 9 above, in which a weight average fiber length of the carbon fibers Cyc contained in the layer Yc is longer than a weight average fiber length of the carbon fibers Cycg and/or the glass fibers Gy contained in the layer Ycg.

11. The method for producing a molded body according to any one of 1 to 10 above, in which at least one of the carbon fibers Cx, the glass fibers Gx, the carbon fibers Cy, and the glass fibers Gy are recycled fibers.

12. The method for producing a molded body according to any one of 1 to 11 above, in which the matrix resin Rx contained in the molding material X and the matrix resin Ry contained in the molding material Y are thermoplastic resins.

13. The method for manufacturing a molded body according to any one of 1 to 12, in which the molded body is an impact-resistant member, and the molding material Y is a side to be subjected to an impact.

14. The method for manufacturing a molded body according to 13, in which the molding material Y is a laminated body Py in which a layer Yc and a layer Ycg are laminated, the molded body is an impact-resistant member, and the layer Yc is a side to be subjected to an impact.

15. The method for producing a molded body according to any one of 1 to 14, in which the molding material X and the molding material Y have a flat plate shape.

16. The method for producing a molded body according to any one of 1 to 15 above, wherein a thickness 1x of the molding material X is 0.5 mm or more and 5.0 mm or less, and a thickness ly of the molding material Y is 0.5 mm or more and less than 5.0 mm.

17. A method for producing a molded body according to any one of claims 1 to 16, including cold-pressing using a mold Mx and a mold My which are a pair of molds by bringing the molding material X into contact with the mold Mx and the molding material Y into contact with the mold My, in which:

the molded body includes a pair of side walls and a connecting wall connecting the side walls;
a cross section of the molded body has a wave shape; and
a relationship between a flatness Fa of the molded body and a height h of the side walls satisfies $0 \leq Fa/h < 1.1$.

18. The method for producing a molded body according to 17 above, in which the mold Mx is a lower mold, and the mold My is an upper mold.

19. The method for producing a molded body according to any one of 17 and 18 above, in which the cross section of the molded body has a shape with multiple waves, and a length in a wave direction is 0.5 m or more.

20. The method for producing a molded body according to any one of 17 to 19, in which an angle $\theta1$ between the side wall and the connecting wall on a side where the molding material X is present in a surface layer satisfies $90° \leq \theta1 < 160°$.

21. The method for producing a molded body according to 20 above, in which the mold Mx includes a mold surface S1 for forming the connecting wall and a mold surface S2 for forming the side wall, and an angle $\theta2$ between the mold surface S1 and the mold surface S2 satisfies $\theta1 \leq \theta2$.

22. The method for producing a molded body according to any one of 17 to 21, in which the molded body includes a rib between the connecting wall and the side wall.

23. The method for producing a molded body according to any one of 17 to 22 above, in which a flatness Fc of a cavity of the mold used for the cold pressing satisfies $Fa \leq Fc$.

24. A method of producing a joined body, including:

deforming a molded body obtained by the manufacturing method according to any one of 20 to 23 to reduce the angle $\theta1$; and
joining the molded body in a state in which a relationship between a flatness Fa' and the height h of the side wall of the molded body after deformation satisfies $0 \leq Fa'/h < 0.1$.

ADVANTAGEOUS EFFECTS OF INVENTION

In the present invention, a molded body with little warpage even when molded using a molding material containing discontinuous carbon fibers and discontinuous glass fibers can be provided.

BRIEF DESCRIPTION OF DRAWINGS

FIG. 1 is a schematic view showing an example of a molded body of the present invention.
FIG. 2A is a schematic view showing an open state of a pair of male and female molds.
FIG. 2B is a schematic view showing a closed state of a pair of male and female molds.
FIG. 3A is a schematic view showing a state in which the molding material X and the molding material Y are laminated and cold-pressed by a mold.
FIG. 3B is a schematic view showing a molded body taken out from a mold.
FIG. 4 is a schematic view showing an example of a molded body of the present invention.

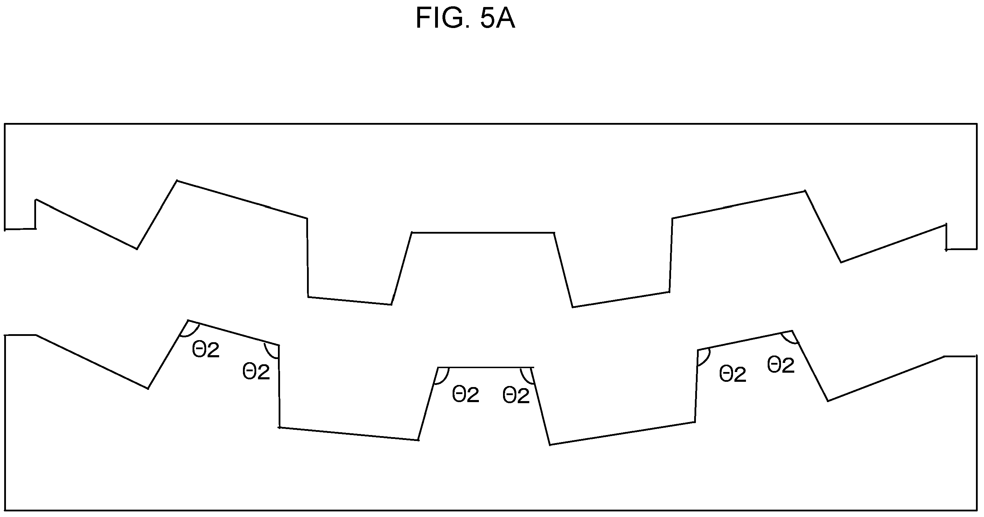

FIG. 5A is a schematic view showing an open state of a pair of male and female molds.

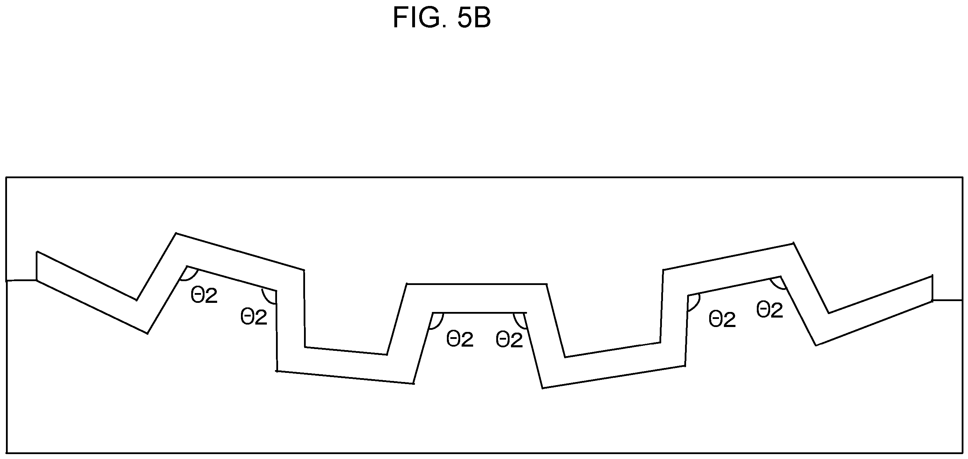

FIG. 5B is a schematic view showing a closed state of a pair of male and female molds.
FIG. 6A is a schematic view showing a state in which the molding material X and the molding material Y are laminated and cold-pressed by a mold.
FIG. 6B is a schematic view showing a molded body taken out from a mold.
FIG. 7A is a schematic view showing a molded body having ribs between a connecting wall and a side wall.
FIG. 7B is a schematic view showing a molded body having ribs between a connecting wall and a side wall.
FIG. 8A is a schematic diagram showing how a molded body is joined to a separate component to manufacture a joined body in a state in which the angle θ1 is set to the angle θ3 by stress-deformation of the molded body.

FIG. 8B is a schematic view showing joining of a molded body with a separate component in a state in which the angle θ1 is set to the angle θ3 by stress deformation to manufacture a joined body.

FIG. 9A is a schematic diagram in which an observation range of the molded body is cut out such that the length Ly in the wave direction is 40 cm, and a cross section of the wave shape is observed, and is a diagram illustrating a method of measuring flatness.

FIG. 9B is a schematic view showing a lower wall of the molded body.

FIG. 9C is a schematic view showing a lower surface of a lower wall of the molded body.

FIG. 10 is a schematic view showing a height h of a side wall of the molded body.

FIG. 11 is a schematic view showing an example of a molded body of the present invention.

FIG. 12 is a schematic view illustrating a method of measuring the flatness Fc of a mold cavity.

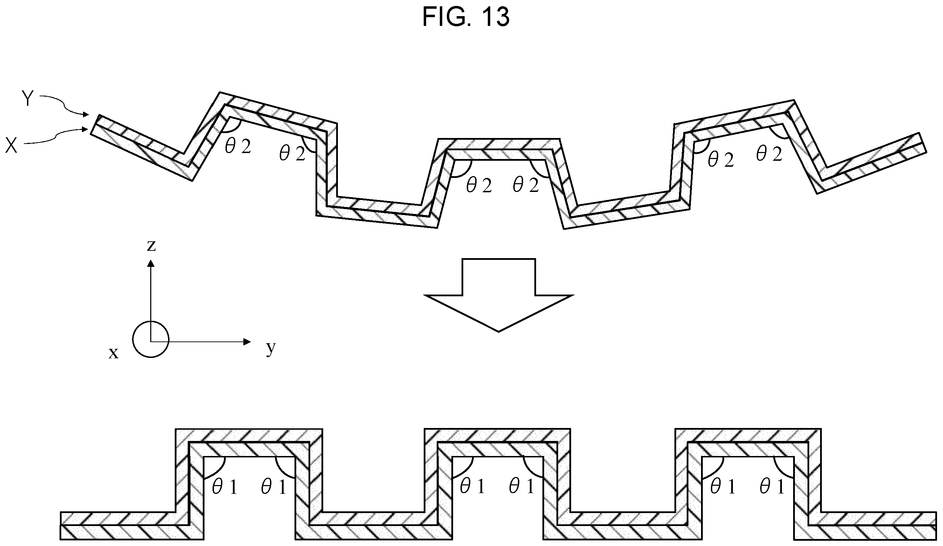

FIG. 13 is a schematic diagram illustrating a phenomenon that warps with a lapse of time immediately after production of a molded body.

FIG. 14 is a diagram showing a laminated form of the molding material X and the molding material Y described in Example 1.

FIG. 15 is a diagram showing a laminated form of the molding material X and the molding material Y described in Example 4.

FIG. 16 is a schematic view showing a state of marking a mold for measuring a molding shrinkage.

## DESCRIPTION OF EMBODIMENTS

[Carbon fiber]

In this specification, the carbon fiber Cx and the carbon fiber Cy are collectively simply referred to as "carbon fiber". As carbon fibers for use in the present invention, polyacrylonitrile (PAN)-based carbon fibers, petroleum/coal pitch-based carbon fibers, rayon-based carbon fibers, cellulose-based carbon fibers, lignin-based carbon fibers, phenol-based carbon fibers, and the like are generally known. In the present invention, any of these carbon fibers can be preferably used. Among these, in the present invention, it is preferable to use polyacrylonitrile (PAN)-based carbon fibers because of excellent tensile strength thereof.

[Fiber diameter of carbon fiber monofilament]

The fiber diameter of the carbon fiber monofilament (generally, the monofilament may be called a filament) used in the present invention may be appropriately determined according to the type of carbon fiber, and is not particularly limited. The average fiber diameter is generally preferably in the range of 3 $\mu$m to 50 $\mu$m, more preferably in the range of 4 $\mu$m to 12 $\mu$m, even more preferably in the range of 5 $\mu$m to 8 $\mu$m. When the carbon fibers have a fiber bundle shape, the average fiber diameter is not the diameter of the fiber bundle, and refers to the average of the diameters of the single fibers of the carbon fibers constituting the fiber bundle. The average fiber diameter of carbon fibers can be measured, for example, by the method described in JIS R-7607:2000.

[Glass Fiber]

In this specification, the glass fiber Gx and the glass fiber Gy are simply referred to as "glass fibers". The type of glass fibers used in the present invention is not particularly limited, and a glass fiber made of any of E glass, A glass, or C glass can be used, or a mixture thereof can be used. The glass fiber in the present invention is not particularly limited, but an average fiber diameter of the glass fibers is preferably 1 $\mu$m to 50 $\mu$m, and more preferably 5 $\mu$m to 20 $\mu$m. When the glass fibers are strands formed by twisting glass filaments, the average fiber diameter refers to the average of the diameters of the filaments constituting the strands, rather than the diameter of the strands. The glass fibers may be single-ended roving or multi-end roving.

[Sizing agent]

The carbon fiber or glass fiber used in the present invention may have a sizing agent adhered to the surface thereof. When the carbon fiber or the glass fiber to which the sizing agent is adhered is used, the type of the sizing agent can be appropriately selected according to the types of the carbon fiber or the glass fiber and the matrix resin, and is not particularly limited.

[Weight average fiber length]

The carbon fiber is preferably a discontinuous fiber, and a weight average fiber length thereof is preferably 1 mm or more and 100 mm or less. Similarly, the glass fiber is preferably a discontinuous fiber, and a weight average fiber length thereof is preferably 1 mm or more and 100 mm or less. In order to solve the problem of warpage, the fiber is preferably a continuous fiber, but the above range of the weight average fiber length is preferable from the viewpoint of improving formability.

Hereinafter, the glass fiber and/or the carbon fiber are collectively referred to as the "reinforcing fiber". In other words, in this specification, the reinforcing fibers are at least one of glass fibers and carbon fibers. Reinforcing fibers may also refer to both carbon fibers and glass fibers.

In the present invention, reinforcing fibers having different fiber lengths may be used in combination. In other words, the reinforcing fiber may have a single peak at the weight average fiber length, or may have a plurality of peaks.

An average fiber length of the reinforcing fibers can be determined, for example, by measuring the fiber lengths of 100 fibers randomly extracted from the molded body in 1 mm increment using a caliper or the like based on the following formula (a). The average fiber length may be calculated by weight average fiber length (Lw).

When the fiber length of each reinforcing fiber is represented by Li and the number of the measured fibers is represented by j, the number average fiber length (Ln) and the weight average fiber length (Lw) are obtained according to the following equations (a) and (b).

[Mathematical formula 1]

$$\mathrm{Ln} = \sum_{i=1}^{j} L_i / j \qquad \cdots \text{Formula (a)}$$

$$\mathrm{Lw} = \left(\sum_{i=1}^{j} L_i{}^2\right) / \left(\sum_{i=1}^{j} L_i\right) \qquad \cdots \text{Formula (b)}$$

When the fiber length is constant, the number average fiber length and the weight average fiber length are the same.

The reinforcing fibers can be extracted from the molded body by, for example, subjecting the molded body to a heat treatment at 500°C for about 1 hour and removing the resin in a furnace.

[Recycling of Carbon Fiber and Glass Fiber] At least one of the carbon fiber Cx, the glass fiber Gx, the carbon fiber Cy, and the glass fiber Gy is preferably recycled fiber.

(1) Molding material X

When the recycled fibers are used as the reinforcing fibers contained in the molding material X, it is necessary to use recycled fibers having a fiber length left to some extent in order to produce the molding material X such that an average molding shrinkage (X) of the molding material X in an in-plane direction satisfies the following formula (1), and an average molding shrinkage (X) and an average molding shrinkage (Y) of the molding material Y satisfy the following formula (2). More specifically, in the case of collecting and reusing offcuts generated when producing the molding material X, when the offcuts of the molding material X are sprayed as they are, the molding material X obtained by the spraying includes reinforcing fibers randomly dispersed in the in-plane direction.

(2) Molding material Y

Preferably, the molding material Y is a laminated body Py in which the layer Yc and the layer Ycg are laminated, in which the layer Yc contains discontinuous carbon fibers Cyc, and the layer Ycg contains carbon fibers Cycg and/or glass fibers Gy. The carbon fiber Cyc and the carbon fiber Cycg are the carbon fibers Cy contained in the molding material Y.

The carbon fibers Cycg and/or the glass fibers Gy contained in the layer Ycg are preferably recycled fibers. For example, an offcut containing the carbon fiber Cx or the glass fiber Gx generated when the molding material X is manufactured may be reused for producing the layer Ycg.

[Matrix resin] The matrix resin Mx contained in the molding material X and the matrix resin My contained in the molding material Y in the present invention may be thermosetting or thermoplastic, but are preferably a thermoplastic matrix resin. It is preferable that the matrix resin Mx and the matrix resin My are the same type of resin.

1. Thermosetting matrix resin

When the resin is a thermosetting matrix resin, the composite material is preferably a sheet molding compound (sometimes called as SMC) using reinforcing fibers. Due to its high moldability, the sheet molding compound can be easily molded even in a complicated shape compared to a molding material using continuous fibers. The sheet molding compounds have higher fluidity and formability than continuous fibers, and ribs and bosses can be easily formed.

2. Thermoplastic matrix resin

When the matrix resin Rx and the matrix resin Ry are thermoplastic matrix resins, the kind thereof is not particularly limited, and those having a desired softening point or melting point can be appropriately selected and used. As the thermoplastic matrix resin, one having a softening point in the range of 180°C to 350°C is usually used, but the thermoplastic matrix resin is not limited thereto.

Kinds of thermoplastic resins include vinyl chloride-based resins, vinylidene chloride-based resins, vinyl acetate-based resins, polyvinyl alcohol-based resins, polystyrene-based resins, acrylonitrile-styrene-based resins (AS resins), acrylonitrile-butadiene-styrene-based resins (ABS resins), acrylic resins, methacrylic resins, polyethylene-based resins, polypropylene-based resins, various thermoplastic polyamide-based resins, polyacetal-based resins, polycarbonate-based resins, polyethylene terephthalate-based resins, polyethylene naphthalate-based resins, polybutylene naphthalate-based resins, polybutylene terephthalate-based resins, polyarylate-based resins, polyphenylene ether-based resins, and polyphenylene sulfide-based resins, polysulfone-based resins, polyether sulfone-based resins, polyether ether ketone-based resins, and polylactic acid-based resins.

The thermoplastic resin in the present invention may be a crystalline resin or an amorphous resin. In the case of the crystalline resin, specific preferable examples of the crystalline resin include a polyamide-based resin such as nylon 6, a polyethylene terephthalate-based resin, a polybutylene terephthalate-based resin, a polyethylene-based resin, a polypropylene-based resin, a polyacetal-based resin, and a polyphenylene sulfide-based resin. Among these, a polyamide resin, a polybutylene terephthalate resin, and a polyphenylene sulfide resin are preferably used because of excellent heat resistance and mechanical strength.

[Other agents]

The molding material X or the molding material Y used in the present invention may contain additives such as various fibrous or non-fibrous fillers of organic fibers or inorganic fibers other than carbon fibers or glass fibers, a flame retardant, a UV resistance agent, a stabilizer, a mold release agent, a pigment, a softening agent, a plasticizer, a surfactant, and a hollow glass bead within a range not impairing the object of the present invention.

[Molding material]

In this specification, the molding material X and the molding material Y may be simply referred to as "molding material". When simply referred to as "molding material", it is a concept including the molding material X, the molding material Y, or a laminated body thereof. It is preferable that the molding material X and the molding material Y have a flat plate shape, and it is preferable that the molding material X and the molding material Y form a molded body layer X and a molded body layer Y respectively when the molding material X and the molding material Y having a flat plate shape are laminated and cold-pressed to form a molded body.

[Molding material X]

The molding material X contains discontinuous carbon fibers Cx, discontinuous glass fibers Gx, and a matrix resin Rx.

1. Carbon fiber Cx

1.1. Bundle Form

The carbon fiber Cx contains a carbon fiber Cx1 having a fiber width of less than 0.3 mm and a carbon fiber Cx2 having a fiber width of 0.3 mm or more and 3.0 mm or less, and a volume ratio of the carbon fiber Cx2 to the carbon fiber Cx is 10 Vol% or more and less than 99 Vol%. The volume ratio of the carbon fibers Cx2 is preferably 50 vol% or more and less than 99 vol%, and more preferably 70 vol% or more and less than 99 vol%.

1.2. Measurement method

A method for measuring the fiber width and the volume ratio of the carbon fibers Cx is not particularly limited, but can be measured by, for example, the following method.

(1) Sample preparation

Cut out the material of the region to be measured, and prepare a 100 mm × 100 mm sample. The sample is heated in an electric furnace (FP410 manufactured by Yamato Scientific Co., Ltd.) heated to 500°C in a nitrogen atmosphere for 1 hour to burn away an organic substance such as a matrix resin.

(2) Measured number of fiber bundles

0.5 g of reinforcing fibers contained in one 100 mm × 100 mm sample (after burning off) is sampled, and a total of 1200 carbon fibers Cx having a fiber length of 5 mm or more are randomly extracted with tweezers.

The measured number of carbon fibers Cx is obtained from the n value derived from the following formula (c) with a tolerance ε of 3%, a reliability μ(α) of 95%, and a population ratio ρ of 0.5 (50%).

$$n = N/[(\varepsilon/\mu(\alpha))^2 \times \{(N-1)/\rho(1-\rho)\} +1] \qquad \text{Formula (c)}$$

n: Number of samples required
μ (α): 1.96 at a reliability of 95%
N: Size of population
ε: Tolerance
ρ: Population ratio

For example, in the case of a sample obtained by cutting out a composite material having a carbon fiber volume (Vf) of 35% to 100 mm × 100 mm × a thickness of 2 mm, the size N of the population is determined by: (100 mm × 100 mm × thickness of 2 mm × Vf 35%) / ((Di μm / 2)$^2$ × π × fiber length × (number of monofilaments contained in fiber bundle)).

If the fiber diameter Di is 7 μm, the fiber length is 20 mm, and the number of monofilaments included in the fiber bundle is designed to be 1000, then N is approximately 9100.

Substituting this value of N into the above formula (4), the required number of samples n is about 960. For example, in the case of measuring the fiber bundle or the fiber length of the carbon fiber, in order to improve the reliability, 1200 fibers, which is slightly more than the number n of necessary samples calculated by the above formula (c), may be extracted and measured for one 100 mm × 100 mm sample.

(3) Measurement of Volume ratio of Carbon Fibers Cx1 and Carbon Fiber Cx2 to Carbon Fiber Cx

In the present invention, it is sufficient that the carbon fiber Cx contains the carbon fiber Cx1 having a fiber width of less than 0.3 mm and the carbon fiber Cx2 having a fiber width of 0.3 mm or more and 3.0 mm or less, but the carbon fiber Cx3 having a fiber width of more than 3.0 mm may be contained. The following description is given considering the case where the carbon fiber Cx3 is contained.

The taken-out carbon fibers Cx (for example, 1200 pieces) are divided into: carbon fiber Cx1 (fiber width of less than 0.3 mm); carbon fiber Cx2 (fiber width of 0.3 mm or more and 3.0 mm or less); and carbon fiber Cx3 (fiber width of more than 3.0 mm), and weights of the carbon fiber Cx1, the carbon fiber Cx2 and the carbon fiber Cx3 are measured with a balance that can measure weight in 1/1000 mg increment. Based on the measured weight, the volume ratios of the carbon fiber Cx1, the carbon fiber Cx2, and the carbon fiber Cx3 are obtained by the formulas (d-1), (d-2), and (d-3) using the density (ρcf) of the reinforcing fiber.

Volume ratio of carbon fiber Cx1 to carbon fiber Cx = volume of carbon fiber Cx1 / (volume of carbon fiber Cx)     Formula (d-1):

Volume ratio of carbon fiber Cx2 to carbon fiber Cx = volume of carbon fiber Cx2 / (volume of carbon fiber Cx)     Formula (d-2):

Volume ratio of carbon fiber Cx3 to carbon fiber Cx = volume of carbon fiber Cx3 / (volume of carbon fiber Cx)     Formula (d-3):

1.3. Dispersion

In the molding material X, it is preferable that the carbon fibers Cx are dispersed in an in-plane direction. The in-plane direction is a direction orthogonal to a plate thickness direction of the molded body, and means indefinite directions in a parallel surface orthogonal to the plate thickness direction.

Further, it is preferable that the carbon fibers Cx are dispersed two-dimensionally and randomly in an in-plane direction. In the case of cold pressing without flowing the molding material X, since the form of the carbon fibers Cx is substantially maintained before and after molding, it is preferable that the carbon fibers Cx contained in the molded body formed from the molding material X are similarly dispersed two-dimensionally and randomly in the in-plane direction of the molded body.

Here, the "dispersed two-dimensionally and randomly" refers to a state in which the carbon fibers are not oriented in a specific direction in the in-plane direction of the molded body, but are oriented in a disordered manner, and are arranged in a sheet surface without exhibiting a specific directivity as a whole. The molding material X obtained by using the discontinuous fibers dispersed two-dimensionally and randomly is a substantially isotropic molding material X having no in-plane anisotropy.

A degree of the two-dimensional random orientation is evaluated by determining a ratio of tensile moduli in two directions orthogonal to each other. When a ratio (E$\delta$) obtained by dividing a larger value of the measured values of the tensile elastic modulus by a smaller value is 5 or less, more preferably 2 or less, and still more preferably 1.5 or less in any direction of the molded body and a direction orthogonal thereto, it can be evaluated that the carbon fibers Cx are dispersed two-dimensionally and randomly. Since the molded body has a three-dimensional shape, as a method of evaluating two-dimensional random distribution in an in-plane direction, it is preferable to heat the molded body to a softening temperature or higher to return the molded body to a flat plate shape and solidify the molded body. After that, when the test piece is cut out from the molded body returned to the flat plate shape and the tensile elastic modulus is obtained, a random distribution state in a two-dimensional direction can be confirmed.

2. Glass fiber Gx

In the molding material X, it is preferable that the glass fibers Gx are dispersed in an in-plane direction. The in-plane direction is a direction orthogonal to a plate thickness direction of the molded body, and means indefinite directions in a parallel surface orthogonal to the plate thickness direction.

Further, it is preferable that the glass fibers are randomly dispersed in the two-dimensional direction in the in-plane direction. In the case of cold pressing without flowing the molding material X, since the form of the glass fibers Gx is substantially maintained before and after molding, it is preferable that the glass fibers Gx contained in the molded body formed from the molding material X are similarly dispersed two-dimensionally and randomly in the in-plane direction of the molded body.

Here, the "dispersed two-dimensionally and randomly" refers to a state in which the glass fibers are not oriented in a specific direction such as one direction in the in-plane directions of the molded body, but are oriented in a disordered manner, and are arranged in the sheet surface without exhibiting a specific directivity as a whole. The molding material X (or molded body) obtained by using the discontinuous fibers dispersed two-dimensionally and randomly is a substantially isotropic molding material X (or molded body) having no in-plane anisotropy.

A degree of the two-dimensional random orientation is evaluated by determining a ratio of tensile moduli in two directions orthogonal to each other. When a ratio (E$\delta$) obtained by dividing a larger value by a smaller value of the values of the tensile elastic moduli measured in any direction and in a direction orthogonal to the any direction of the molded body is 5 or less, more preferably 2 or less, and still more preferably 1.5 or less, it can be evaluated that the glass fibers Gx are dispersed two-dimensionally and randomly. Since the molded body has a three-dimensional shape, as a method of evaluating two-dimensional random distribution in an in-plane direction, it is preferable to heat the molded body to a softening temperature or higher to return the molded body to a flat plate shape and solidify the molded body. After that, when the test piece is cut out from the molded body returned to the flat plate shape and the tensile elastic modulus is obtained, a random distribution state in a two-dimensional direction can be confirmed.

3. Carbon fiber Cx and glass fiber Gx

3.1. Volume ratio

A volume ratio of the carbon fiber Cx/the glass fiber Gx is 0.1 or more and 1.5 or less. The volume ratio is preferably 0.1 or more and 1.0 or less, more preferably 0.2 or more and 0.8 or less, and still more preferably 0.3 or more and 0.6 or less. When the volume ratio of the carbon fiber Cx/the glass fiber Gx is 0.1 or more, warpage when combined with the molding material Y can be reduced, and when the volume ratio is 1.5 or less, impact resistance can be kept high in the same configuration.

The volume ratio of the carbon fiber Cx/the glass fiber Gx is the ratio of the carbon fiber Cx to the glass fiber Gx.

3.2. Fiber length

The weight average fiber length of the reinforcing fibers contained in the molding material X is more preferably 5 mm or more and 100 mm or less, still more preferably 5 mm or more and 80 mm or less, and yet still more preferably 10 mm or more and 60 mm or less. When the weight average fiber length of the reinforcing fibers is 100 mm or less, the fluidity of the molding material X is improved, and a desired molded body shape is easily obtained when cold pressing is performed. On the other hand, when the weight average fiber length is 1 mm or more, the mechanical strength of the molded body is likely to be improved.

4. Same layer

In the molding material X, the carbon fiber Cx and the glass fiber Gx may be mixed in the same layer Xm. The same layer refers to a layer connected in a plane shape, and carbon fibers Cx and glass fibers Gx overlap in the same layer. The same layer can be formed by simultaneously applying the carbon fiber Cx and the glass fiber Gx. Further, it is more preferable that the molding material X is a single layer, and the carbon fiber Cx and the glass fiber Gx are mixed in the single layer.
If the carbon fiber Cx and the glass fiber Gx are mixed in the same layer, the lamination step can be omitted.

5. Laminated body Px

It is preferable that the molding material X is a laminated body Px in which the layer Xc and the layer Xg are laminated, and the layer Xc contains the carbon fiber Cx and the layer Xg contains the glass fiber Gx. The lamination configuration is not particularly limited, and examples thereof include the following lamination configuration.

Layer Xg/layer Xc (two-layer configuration)
Layer Xg/layer Xc/layer Xg (three-layer configuration)
Layer Xc/layer Xg/layer Xc (three-layer configuration)
Layer Xg/layer Xc/layer Xg/layer Xc (four-layer configuration)
Layer Xg/layer Xc/layer Xg/layer Xc/layer Xg (five-layer configuration)
Layer Xc/layer Xg/layer Xc/layer Xg/layer Xc (five-layer configuration)
Layer Xc/layer Xg/layer Xc/layer Xg/layer Xc/layer Xg (six-layer configuration)
Layer Xc/layer Xg/layer Xc/layer Xg/layer Xc/layer Xg/layer Xc (seven-layer configuration)
Layer Xg/layer Xc/layer Xg/layer Xc/layer Xg/layer Xc/layer Xg (seven-layer configuration)

More preferably, the laminated body Px has an odd-numbered layer in which the layer Xc and the layer Xg are combined, and even more preferably has a three-layer, five-layer, or seven-layer configuration. When the total of the number of layers Xc and Xg is an odd number (layer configuration is symmetry), warpage of the molding material X alone can be prevented.
Even if a lamination configuration of the layer Xc and the layer Xg is asymmetric and warpage occurs in the laminated body Px alone, there is no problem as long as no warpage occurs when the molding material X and the molding material Y are laminated.

6. Role of the glass fibers Gx contained in the molding material X

It is more preferable that the molded body is an impact-resistant member, and is located on a side opposite to a side where the molding material X receives an impact when the molded body is formed. When the molded body is formed, it is more preferable that at least one outermost layer is the layer Xg. It is even more preferable that the layer Xg is present in a surface layer opposite to the side to be subjected to the impact. With this configuration, when the molded body in the present invention is subjected to an impact, the tensile elongation can be increased in the surface layer opposite to the impact receiving side. In other words, when an impact force is applied to one surface of the material, a large tensile stress is applied to the opposite surface, and therefore the impact resistance can be improved by increasing the tensile fracture elongation of the opposite surface. By forming the layer containing the glass fibers having a large fracture strain in the surface layer opposite to the side to be subjected to the impact, cracks are less likely to be generated on the surface layer opposite to the side to be subjected to the impact. More specifically, since the volume content of the carbon fibers is equal to or less than the volume content of the glass fibers in the surface layer opposite to the side to be subjected to the impact, the fracture strain of this layer is improved, the impact resistance is improved, and cracks are less likely to be generated. When the molding material X is a single layer, the fracture strain of the glass fibers contained in the single layer is large. When the molding material X is the laminated body Px and the layer Xg is in the outermost layer, the fracture strain of the glass fibers contained in the layer Xg is large.

[Problem during lamination of molding material X and molding material Y]

When the following line-symmetric layer structure is simply used, warpage of the molded body is easily prevented since a difference in average molding shrinkage is canceled, but a problem remains.

Example 1: (carbon fiber and resin)/(glass fiber and resin)/(carbon fiber and resin)
Example 2: (glass fiber and resin)/(carbon fiber and resin)/(glass fiber and resin)

In the case of Example 1, when subjected to an impact, cracks are easily generated because the surface layer opposite to the impact receiving side is a carbon fiber composite material. In the case of Example 2, since the carbon fiber is not contained in the surface layer contributing to the rigidity, the molded body does not have a sufficient rigidity. When the carbon fiber and the resin are present only in the central layer, the carbon fiber and the resin layer hardly contribute to ensuring the rigidity of the molded body.

[Molding material Y]

1. Overview

A method for producing a molded body of the present invention is a method for producing a molded body by cold-pressing a molding material X and a molding material Y by laminating the molding material X and the molding material Y, in which the molding material Y includes discontinuous carbon fibers Cy and/or glass fibers Gy, and a matrix resin Ry.

The molding material Y may preferably be a carbon fiber reinforced thermoplastic resin molding material containing discontinuous carbon fibers Cy and a matrix resin Ry, and in this case, it is preferably a single-layer carbon fiber reinforced thermoplastic resin molding material. By adopting a configuration that does not include glass fibers, the manufacturing process can be simplified. On the other hand, a laminated body Py, which will be described later, may be used as the molding material Y.

2. Laminated body Py

It is preferable that the molding material Y is a laminated body Py in which the layer Yc and the layer Ycg are laminated, in which the layer Yc contains discontinuous carbon fibers Cyc, and the layer Ycg contains carbon fibers Cycg and/or glass fibers Gy. When the laminated body Py is used, the molding material Y preferably contains carbon fibers Cy and glass fibers Gy. The lamination configuration is not particularly limited, and examples thereof include the following lamination configuration.

Layer Yc/layer Ycg (two-layer configuration)
Layer Yc/layer Ycg/layer Yc (three-layer configuration)
Layer Ycg/layer Yc/layer Ycg (three-layer configuration)
Layer Yc/layer Ycg/layer Yc/layer Ycg (four-layer configuration)
Layer Yc/layer Ycg/layer Yc/layer Ycg/layer Yc (five-layer configuration)
Layer Ycg/layer Yc/layer Ycg/layer Yc/layer Ycg (five-layer configuration)
Layer Yc/layer Ycg/layer Yc/layer Ycg/layer Yc/layer Ycg (six-layer configuration)
Layer Yc/layer Ycg/layer Yc/layer Ycg/layer Yc/layer Ycg/layer Yc (seven-layer configuration)
Layer Ycg/layer Yc/layer Ycg/layer Yc/layer Ycg/layer Yc/layer Ycg (seven-layer configuration)

The laminated body Py preferably has a three-layer structure of layer Yc/layer Ycg/layer Yc.

When the molded body is formed, it is more preferable that at least one outermost layer is the layer Yc. It is more preferable that the molded body is an impact-resistant member, and the molding material Y is on a side that receives an impact. It is even more preferable that the molded body is an impact-resistant member, and the layer Yc is a side to be subjected to an impact.

Since the layer Yc contains carbon fibers, the appearance is beautiful, and when the layer Yc is present on the surface, the appeal to the customer is high. In particular, when the outermost layer Yc to be a design surface has a grain, the design property is exceptional.

As will be described later, the carbon fibers contained in the layer Yc are preferably randomly dispersed in a two-dimensional direction in the plane. By forming the layer Yc randomly dispersed in the two-dimensional direction as the outermost layer, the bending rigidity can be increased.

### 3. Carbon fiber Cyc contained in the layer Yc

Among the carbon fibers Cy contained in the molding material Y, the carbon fibers contained in the layer Yc are defined as carbon fibers Cyc.

### 3.1. Bundle Form

The carbon fiber Cyc contains a carbon fiber Cyc1 having a fiber width of less than 0.3 mm and a carbon fiber Cyc2 having a fiber width of 0.3 mm or more and 3.0 mm or less, and a volume ratio of the carbon fiber Cyc2 to the carbon fiber Cyc is preferably 10 Vol% or more and less than 99 Vol%. The volume ratio of the carbon fibers Cyc2 is preferably 50 vol% or more and less than 99 vol%, and more preferably 70 vol% or more and less than 99 vol%. The fiber width and the volume ratio of the carbon fiber Cyc can be measured in the same manner as in the above-described method of measuring the fiber width and the volume ratio of the carbon fiber Cx.

### 3.2. Dispersion

In the molding material Y, it is preferable that the carbon fibers Cyc are dispersed in an in-plane direction. The in-plane direction is a direction orthogonal to a plate thickness direction of the molded body, and means indefinite directions in a parallel surface orthogonal to the plate thickness direction.

Further, it is preferable that the carbon fibers Cyc are dispersed two-dimensionally and randomly in the in-plane direction. In the case of cold pressing without flowing the molding material Y, since the form of the carbon fibers Cyc is substantially maintained before and after molding, it is preferable that the carbon fibers Cyc contained in the molded body obtained from the molding material Y are similarly dispersed two-dimensionally and randomly in the in-plane direction of the molded body.

Here, the "dispersed two-dimensionally and randomly" refers to a state in which the carbon fibers are not oriented in a specific direction such as one direction in the in-plane directions of the molded body, but are oriented in a disordered manner, and are arranged in a sheet surface without exhibiting a specific directivity as a whole. The molding material Y obtained by using the discontinuous fibers dispersed two-dimensionally and randomly is a substantially isotropic molding material Y having no in-plane anisotropy.

A degree of the two-dimensional random orientation is evaluated by determining a ratio of tensile moduli in two directions orthogonal to each other. When a ratio ($E\delta$) obtained by dividing a larger value by a smaller value of the values of the tensile elastic moduli measured in any direction and in a direction orthogonal to the any direction of the molded body is 5 or less, more preferably 2 or less, and still more preferably 1.5 or less, it can be evaluated that the carbon fibers Cyc are dispersed two-dimensionally and randomly. Since the molded body has a shape, as a method of evaluating the two-dimensional random dispersion in the in-plane directions, it is preferable to heat the molded body to a softening temperature or higher to return the molded body to a flat plate shape and solidify the molded body. After that, the test piece is cut out, the tensile moduli are obtained, and then a random dispersion state in the two-dimensional directions can be confirmed.

### 3.3. Fiber length

The weight average fiber length of the reinforcing fibers is more preferably 5 mm or more and 100 mm or less, still more preferably 5 mm or more and 80 mm or less, and yet still more preferably 10 mm or more and 60 mm or less.

When the weight average fiber length of the carbon fiber Cyc is 100 mm or less, the fluidity of the molding material Y is improved, and a desired molded body shape is easily obtained when cold pressing is performed. On the other hand, when the weight average fiber length is 5 mm or more, the mechanical strength of the molded body is likely to be improved.

### 4. Carbon fibers Cycg and glass fibers Gy contained in the layer Ycg

### 4.1. Blending ratio

The layer Ycg preferably contains carbon fibers Cycg and/or glass fibers Gy. In other words, as for the reinforcing fibers contained in the layer Ycg, the carbon fiber Cycg may be contained alone, the glass fiber Gy may be contained alone, or the carbon fiber Cycg and the glass fiber Gy may be mixed and contained.

It is preferable that the weight average fiber length of the carbon fibers contained in the layer Yc is longer than the weight average fiber length of the carbon fibers Cycg and/or the glass fibers Gy contained in the layer Ycg.

When the carbon fiber Cycg and the glass fiber Gy are mixed in the layer Ycg, a blending ratio thereof is not particularly limited.

4.2. Fiber length

The weight average fiber length of the reinforcing fibers contained in the layer Ycg is more preferably 0.01 mm or more and 100 mm or less, still more preferably 0.05 mm or more and 50 mm or less, and yet still more preferably 0.1 mm or more and 10 mm or less. When the weight average fiber length of the reinforcing fibers is 100 mm or less, the fluidity of the molding material Y is improved, and a desired molded body shape is easily obtained when cold pressing is performed. On the other hand, when the weight average fiber length is 0.01 mm or more, the mechanical strength of the molded body is likely to be improved.

4.3. Layer Ycg as recycled layer

More preferably, the carbon fibers Cycg and/or the glass fibers Gy contained in the layer Ycg are recycled. Since the layer Ycg has a sandwich structure and sandwiched by the layer Yc, when the carbon fiber Cycg and the glass fiber Gy are mixed in the layer Ycg, a significant difference in mechanical properties is small even if the blending ratio thereof changes. For this reason, when a material containing carbon fibers and glass fibers is generated as an offcut in the manufacturing process, the carbon fibers Cycg and the glass fibers Gy can be mixed in accordance with the generated amount. It is difficult to predict how much of the carbon fiber and the glass fiber offcuts are generated in the manufacturing process, but according to the present invention, it is not necessary to predict the amount of the offcuts generated.

[Average molding shrinkage in in in-plane direction]

1. Formula (1)

In the molding material X, an average molding shrinkage (X) in an in-plane direction of the molding material X satisfies the following formula (1).

$$\text{Formula (1): Average molding shrinkage (X)} \leq 0.12\%$$

The average molding shrinkage $(X) \leq 0.11\%$ is preferable, and the average molding shrinkage $(X) \leq 0.10\%$ is more preferable.
When the average molding shrinkage $(X) \leq 0.12\%$ is satisfied, the warpage can be reduced when the molding material X and the molding material Y are laminated and molded. In general, when a layer containing carbon fibers and a layer containing glass fibers are laminated and cold-pressed, warpage occurs in the obtained molded body as the temperature decreases immediately after molding. Therefore, by setting the shrinkage (X) of the molding material X of the present invention to 0.12% or less, the shrinkage of the molding material X itself is prevented. In other words, the molding material X can be said to be a material with controlled shrinkage.

2. Formula (2)

In the molding material Y of the present invention, it is preferable that an average molding shrinkage (Y) in an in-plane direction satisfies the following formula.

$$\text{Formula (2): } 0.1 < \text{average molding shrinkage (Y)/average molding shrinkage (X)} < 1.5$$

The range of formula (2) is preferably 0.5 < average molding shrinkage (Y)/average molding shrinkage (X) < 1.5, more preferably 0.7 < average molding shrinkage (Y)/average molding shrinkage (X) < 1.3, still more preferably 0.8 < average molding shrinkage (Y)/average molding shrinkage (X) < 1.2, and most preferably 0.8 < average molding shrinkage (Y)/average molding shrinkage (X) < 1.0.
When the thickness is within this range, warpage when the molded body is formed can be reduced.

3. Definition and measurement method

The average molding shrinkage means a shrinkage when the molded body obtained by molding by heating the molding material is cooled to room temperature immediately after molding is completed.

3.1. Definition

The average molding shrinkage is defined by the following formula (3).

[Mathematical formula 2]

$$\text{Formula (3):} \quad \text{Average molding shrinkage (\%)} = \sum_{i=1}^{n} \left( \frac{Lti - Lci}{Lti} \right) / n \times 100$$

Lti: Distance between two points in a specific direction marked on a mold (measured by molding temperature)
Lci: Distance between two points in a specific direction marked on a molded body (measured after cooling to room temperature)
n: Number of measurements

3.2. Measurement method

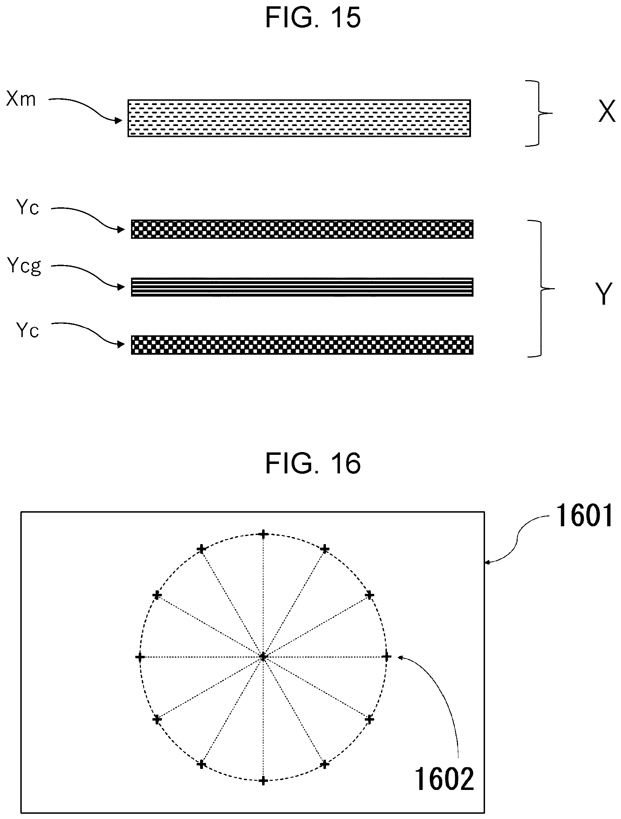

When placing the molding material in the mold, the mold is pre-marked and transferred to the molding material. A shape of the marking is not particularly limited, but for example, "+" or "·" may be used. In the marking, a total of 13 points are marked, one point at the center and 12 points on the circumference so as to draw a circle. The circle has a diameter of 300 mm, and markings of 12 points on a circumference are drawn such that a distance therebetween is uniform. At this time, six imaginary lines can be drawn in the diameter direction in the mold (for example, FIG. 16).
In light of formula (3), the six imaginary lines are the two-point distance in the specific direction of Lti, respectively, and n = 6. It is preferable to measure Lti (distance between two points in an i direction marked on a mold (measured at a molding temperature)) and Lci (distance between two points in an i direction marked on a molded body (measured after cooling to room temperature)) before and after transfer, and substitute them for the above formula (3).

[Fiber volume fraction Vfx of molding material X and fiber volume fraction Vfy of molding material Y]

In the present invention, the volume fraction of the fibers contained in the molding material X or the molding material Y represented by the following formulas is not particularly limited.

Fiber volume fraction Vfx = 100 × volume of reinforcing fibers/(volume of reinforcing fibers + volume of thermoplastic resin Rx of molding material X)　Formula (5):

Fiber volume fraction Vfy = 100 × volume of reinforcing fibers/(volume of reinforcing fibers + volume of thermoplastic resin Ry of molding material Y)　Formula (6):

1. Molding material X

Since the molding material X is a shrinkage control material for preventing warpage when the molding material X and the molding material Y are laminated and molded, it is preferable to determine the fiber volume fraction Vfx so as to satisfy the formula (2).
The fiber volume fraction Vfx is preferably 20 vol% or more and 60 vol% or less, more preferably 30 vol% or more and 50 vol% or less, and still more preferably 35 vol% or more and 45 vol% or less.
When the fiber volume fraction Vfx is 20 vol% or more, desired mechanical properties are likely to be obtained. On the other hand, when the fiber volume fraction Vfx does not exceed 60 Vol%, fluidity when used for press molding or the like is good, and a desired molded body shape is easily obtained.

2. Molding material Y

The fiber volume fraction Vfy is preferably 10 vol% or more and 60 vol% or less, more preferably 20 vol% or more and 50 vol% or less, and still more preferably 25 vol% or more and 45 vol% or less.
When the fiber volume fraction Vfy is 10 vol% or more, desired mechanical properties are likely to be obtained. On the other hand, when the fiber volume fraction Vfy does not exceed 60 Vol%, fluidity when used for press molding or the like is good, and a desired molded body shape is easily obtained.

[Thickness of molding material X and molding material Y]

The thickness 1x of the molding material X and the thickness ly of the molding material Y may be designed in accordance with rigidity and shape constraints required for the molded body.

The thickness 1x is preferably 0.5 mm or more and less than 5.0 mm, more preferably 4.0 mm or less, and still more preferably 3.0 mm or less.

The thickness ly is preferably 1.0 mm or more and 4.0 mm or less, more preferably 3.5 mm or less, still more preferably 3.0 mm or less, still more preferably 2.5 mm or less, and most preferably 2.0 mm or less.

The thickness of the material of each layer may be uniform inside the molded body after cold pressing. In other words, the cold pressing of the present invention is non-flowing molding, and the material may be charged into a mold at a charge ratio of 100% or more and cold-pressed. The charge rate is defined by the following formula.

Charge rate (%) = $100 \times$ projected area (mm$^2$) of molding material X and molding material Y after laminated) / area (mm$^2$) of mold cavity

If the molding material X and the molding material Y have a flat plate shape, the projected area can be easily measured.

[Relationship between molding material and molded body]

In the present invention, the molding material is a material for producing a molded body, and the molding material X and the molding material Y are cold-pressed to form a molded body. Therefore, the molding material X and the molding material Y in the present invention preferably have a flat plate shape. On the other hand, the molded body is shaped into a three-dimensional shape.

When the matrix resin Rx contained in the molding material X and the matrix resin Ry contained in the molding material Y are thermoplastic resins, the form of the reinforcing fibers is substantially maintained before and after molding in a non-flowing region when cold-pressing. Therefore, by analyzing the morphology of the carbon and glass fibers in the molded body, it is possible to determine what the forms of the carbon fibers and glass fibers in the molding material X and the molding material Y were like. When the material is formed without flowing (non-flowing forming) in the cold pressing, the form of fibers is substantially unchanged.

[Mold and Manufacturing Method]

In the production of the molded body in the present invention, it is preferable to perform cold pressing by bringing the molding material X into contact with a mold Mx and the molding material Y into contact with a mold My using the mold Mx and the mold My which are a pair of male and female molds. In other words, one surface of the produced molded body is the molding material X, and the opposite surface is the molding material Y.

[Molded body]

A shape of the molded body molded using the molding material of the present invention is not particularly limited. Hereinafter, a preferable form of the molded body will be described.

1. Side walls and connecting wall

It is preferable that the molded body in the present invention includes a pair of side walls and a connecting wall connected to the side walls.

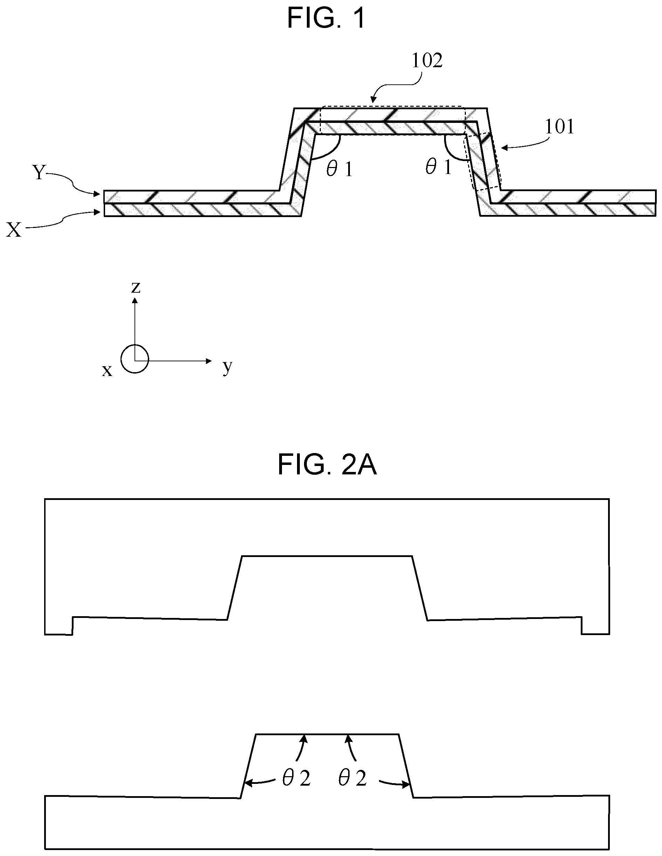

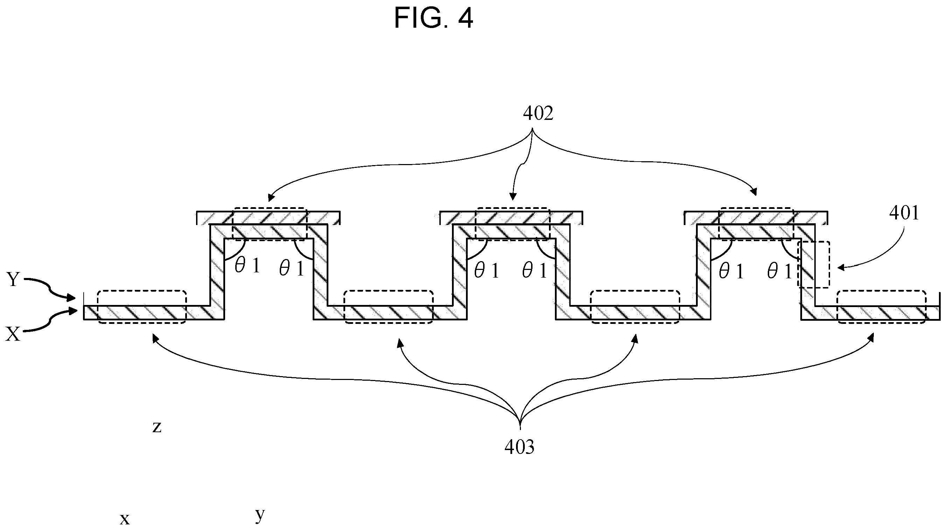

The side walls are, for example, 101 and 401 in FIGS. 1 and 4. The connecting wall is, for example, 102, 402, and 403 in FIGS. 1 and 4. As shown in FIGS. 1 and 4, the connecting wall connects the pair of side walls.

As shown in FIG. 4, the connecting wall is a concept including a connecting wall (402) of an upper wall and a connecting wall (403) of a lower wall. The upper wall (402 in FIG. 4) refers to a connecting wall located on an upper side when the molded body is left to stand such that the material B present in the surface layer is located on a lower side. The lower wall (403 in FIG. 4) refers to a connecting wall located on the lower side when the molded body is left to stand such that the material B present in the surface layer is located on the lower side.

2. Wave shape

The molded body in the present invention preferably has a wave shape in cross section. Here, the wave shape is a shape in which a position in a plate thickness direction is periodically displaced according to a position in a wave direction. As shown in the cross-sectional view in FIG. 1, the number of wave may be one. The molded body preferably has a shape with multiple waves (for example, FIG. 4) in cross section. The length in the wave direction is preferably 0.5 m or more, and more preferably 1 m or more.

It is more preferable that the molded body has a shape with multiple waves and a length in a wave direction is 1 m or more.

The wave direction here is the y-axis direction in FIG. 4, and the plate thickness direction is the z-axis direction in FIG. 4. The molded body having a wave shape in cross section refers to a molded body in which a wave can be observed when a cross section of the molded body is observed. It is general to observe the cross section in an in-plane direction (a direction perpendicular to a plate thickness direction).

3. Flatness Fa and height h of side wall

A relationship between a flatness Fa of the molded body and a height h of the side wall of the present invention preferably satisfies $0 \le Fa/h < 1.1$.

3.1. The flatness Fa of the present invention is defined by the following procedures 1 to 5.

(Procedure 1) The molded body is left to stand such that the molding material X present in the surface layer is located on the lower side. In a preferable form, the molded body may be placed such that the layer Xg is located on the lower side.

(Procedure 2) The cross section of the molded body is observed such that the cross section appears to have a wave shape, and the observation range of the molded body is cut out such that the length Ly in the wave direction is 40 cm.

(Procedure 3) A bottom surface of the lower wall formed by the connecting wall is focused on.

(Procedure 4) Two parallel ideal straight lines are drawn with a minimum necessary width such that the bottom surface of the lower wall is entirely disposed between the two parallel ideal straight lines.

(Procedure 5) A distance between the ideal straight lines is defined as the flatness Fa.

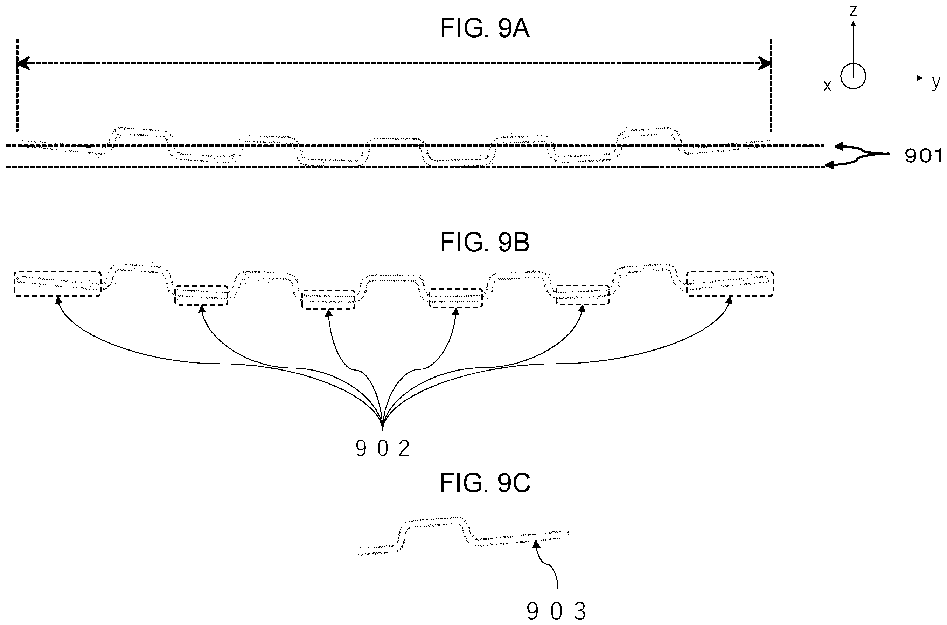

Procedures 1 to 5 will be described with reference to FIGS. 9A to 9C.

FIG. 9A shows a molded body left to stand such that the molding material X present in a surface layer is on a lower side. A surface layer of the molded body on the lower side of the paper surface is covered with the molding material X. The Y-axis direction in FIG. 9A is the wave direction. In FIG. 9A, the observation range of the molded body is cut out such that the length Ly is 40 cm, and the cross section of the wave shape is observed (procedure 2). The lower wall of the connecting wall is a region indicated by 902 in FIG. 9B. In addition, the bottom surface of the lower wall is a surface indicated by 903 in FIG. 9C (procedure 3). As shown by 901 in FIG. 9A, the two parallel ideal straight lines are drawn such that the entire lower wall of the connecting wall is disposed between the two parallel ideal straight lines and a distance between the two parallel ideal straight lines (901) is minimized.

A method of observing and measuring a state in which the top and bottom of the molded body in FIG. 9A are reversed and the surface of the molded body on the lower side of the paper surface is covered with the molding material Y (in a state in which the molding material Y is in contact with a desk top) is not employed in the present invention.

In the case where Fa varies depending on a location where the length Ly in the wave direction is cut out, Fa should be designed so as to satisfy $0 \le Fa/h < 1.1$ even at one location.

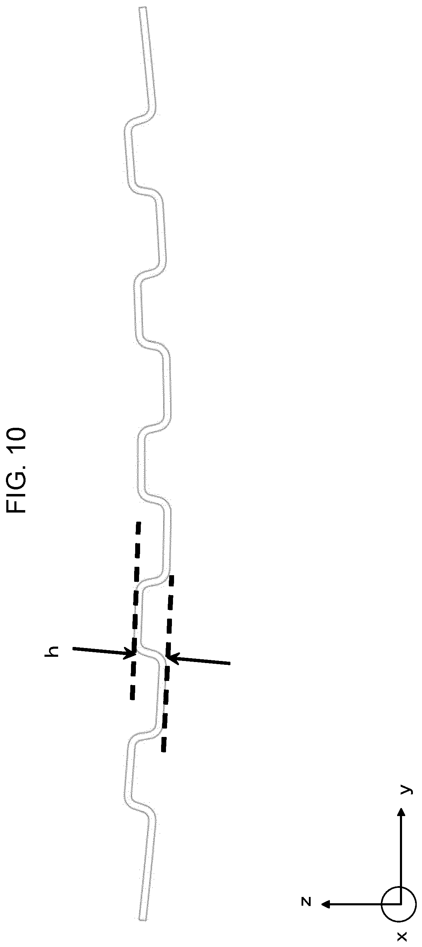

3.2. The height h of the side wall of the present invention is shown by h in FIG. 10, which indicates a distance between the upper wall and the lower wall when observing the cross section of the wave shape. More specifically, when an upper wall and a lower wall directly connected to one side wall are observed, a distance between the ideal straight lines is a height h when two parallel ideal straight lines are drawn with a minimum necessary width such that the entire upper wall and the lower wall are disposed between the two parallel ideal straight lines. The two parallel dotted lines shown in FIG. 10 are drawn such that the entire upper wall and the entire lower wall directly connected to one side wall are arranged between two parallel dotted lines, and a distance between the two parallel dotted lines is minimized.

When the molded body has a plurality of heights h, at least one h may satisfy $0 \le Fa/h < 1.1$.

3.3. When Fa/h = 0 is satisfied, the lower wall of the molded body is an ideal plane. When Fa/h < 1.1 is satisfied, it is easy to assemble, for example, an automobile in combination with other components. $0 \le Fa/h \le 1.0$ is preferable, $0 \le Fa/h \le 0.7$ is more preferable, $0 \le Fa/h \le 0.4$ is still more preferable, $0 \le Fa/h \le 0.2$ is yet still more preferable, and $0 \le Fa/h \le 0.15$ is most preferable.

4. Angle θ1

In the molded body, an angle θ1 between the side wall and the connecting wall on the side where the material B is present in the surface layer preferably satisfies 90° ≤ θ1 < 160°. The angle θ1 between the side wall and the connecting wall on the side where the material B is present in the surface layer is indicated by θ1 in FIGS. 1 and 4, for example. That is, the angle θ1 can be measured when the cross section of the wave shape is observed.

In addition, the molded bodies in FIGS. 1 and 4 have a plurality of θ1 at the same angle. When there are a plurality of angles θ1, but the angles are different from each other, the smallest angle among the angles between the side wall and the connecting wall on the side where the material B is present in the surface layer is defined as the angle θ1.

The range of the angle θ1 is more preferably 95° ≤ θ1 < 135°, even more preferably 95° ≤ θ1 < 125°, and still more preferably 98° ≤ θ1 < 120°.

5. Angle change due to difference in average molding shrinkage

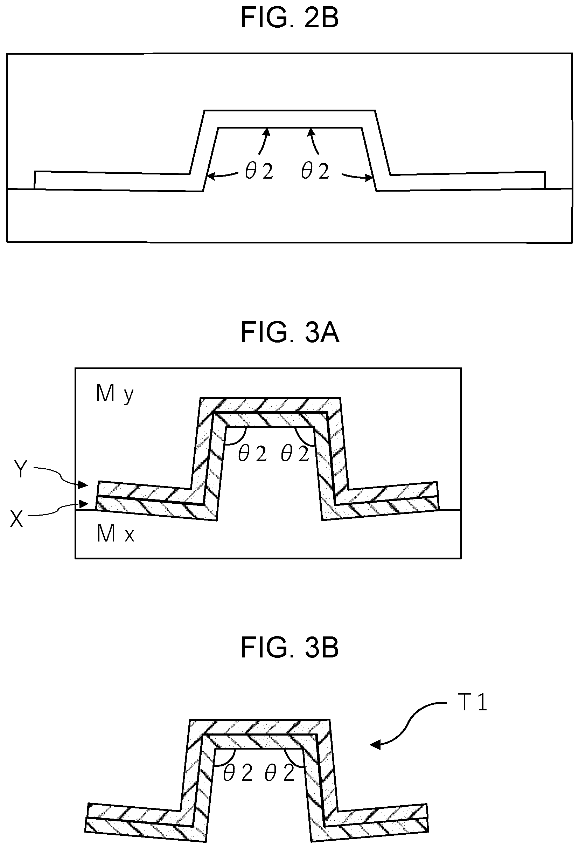

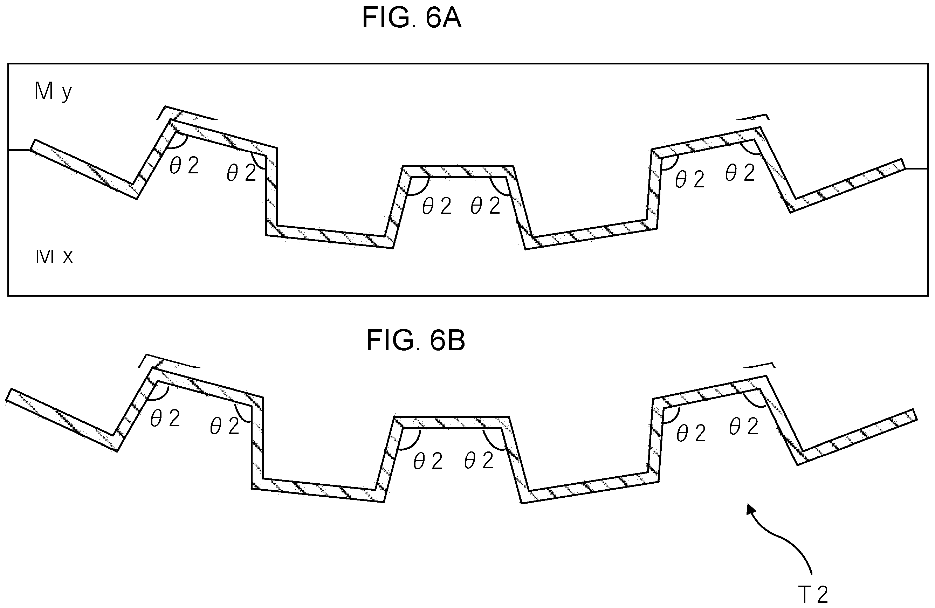

The average molding shrinkages of the molding material X and the molding material Y may be the same (average molding shrinkage (X) = average molding shrinkage (Y) is preferable), but there may be a difference. When there is a difference in average molding shrinkage, and a molded body having a wave shape is prepared by laminating the molding material X and the molding material Y at a temperature higher than room temperature, a layer having a large average molding shrinkage pulls a layer having a small average molding shrinkage. Specifically, since the molding material X pulls the molding material Y, for example, immediately after the cold pressing is completed in FIGS. 3B and 6B, both end portions of the molded body (in the wave direction) warp in the downward direction of the paper plane with a lapse of time. As a result, the angle between the side wall and the connecting wall on the side where the material B is present in the surface layer changes (sometimes referred to as an angle change) between immediately after molding and after a lapse of a while. In order to set the angle θ1 of the molded body to a target angle, it is preferable to predict how much the angle changes, design in advance such that the angle change is an angle of θ2 - θ1, and press-mold the molded body.

Regarding the change in angle (angle change) after a lapse of time from immediately after molding, the problem of warpage of the entire molded body becomes significant as the length in the wave direction increases (specifically, when the length in the wave direction is 1 m or more) and as the number of angles θ1 increases. By using the preferable manufacturing method of the present invention, a molded body having a small Fa/h value can be manufactured even when the length in the wave direction is long or the like.

6. Rib

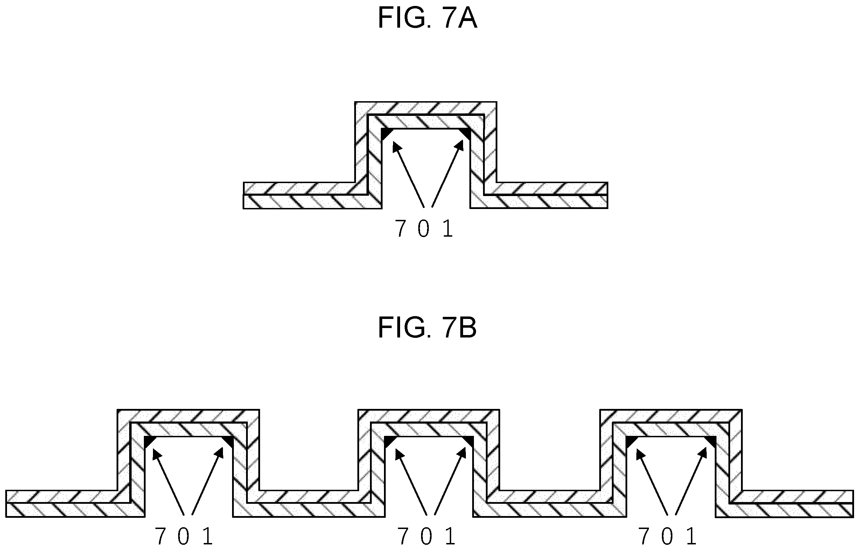

The molded body in the present invention preferably has a rib between the connecting wall and the side wall. The rib is shown by 701 in FIGS. 7A and 7B, for example. By placing the ribs, warpage of the molding material Y and the molding material X with a difference in linear expansion coefficient becomes difficult even when cold-pressing is performed.

[Joined body]

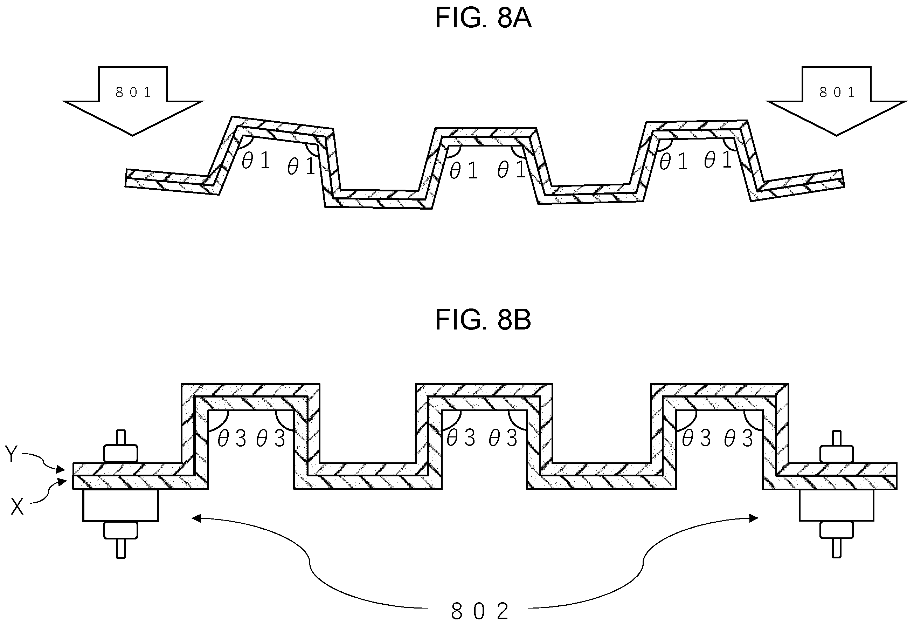

The molded body may be joined to a separate component to manufacture a joined body in a state in which the angle θ1 is reduced by stress deformation and the relationship between the flatness Fa' of the molded body after stress deformation and the height h of the side wall satisfies 0 ≤ Fa'/h < 0.1. For example, a slightly warped molded body as shown in FIG. 8A may be joined to a separate component (802 in FIG. 8B) after stress is applied to the molded body as indicated by an arrow 801 in FIG. 8A and the angle θ1 is changed to the angle θ3. Here, the flatness Fa' means the flatness of the molded body in a joined state. The joining may be performed by bolting as shown in FIG. 8B, or may be performed by joining with an adhesive.

[Cold Pressing]

In the present invention, it is preferable to manufacture a molded body by cold-pressing by bringing the molding material X into contact with a mold Mx and the molding material Y into contact with a mold My using the mold Mx and the mold My which are a pair of male and female molds. FIGS. 3A and 6A show a state in which the molding material X is in contact with the mold Mx and the molding material Y is in contact with the mold My. Here, the male and female molds Mx and My are not each a pair of male and female molds, and the mold Mx and the mold My are pieces, which means that the mold Mx and the mold My form a pair of male and female molds. In addition, for example, as shown in FIGS. 2A and 2B, one of the pair of molds may have a male part, and the other of the pair of molds may have a female part. Each of the molds may have both a male portion and a female portion.

1. Upper and lower of mold

There is no particular limitation on the upper and lower sides of the mold Mx and the mold My, but it is preferable that the mold Mx is a lower mold and the mold My is an upper mold. The reason will be described below.

(Reason 1)

When the matrix resin Rx and the matrix resin Ry are thermoplastic resins and are cold-pressed, the molding material X and the molding material Y before being brought into contact with the mold are heated to a glass transition temperature or a melting point or higher of the thermoplastic resin, as described later. On the other hand, since the temperatures of the upper and lower molds are lower than the glass transition temperature or the melting point of the thermoplastic resin, the thermoplastic resin contained in the molding material is solidified at the moment when the molding material comes into contact with the mold. In particular, when a layer containing carbon fibers (for example, layer Yc) is provided on an outermost layer of a molded body, since the layer is a layer containing carbon fibers, the thermal conductivity is high, and the fluidity is inferior because the layer is more easily cooled than a layer containing glass fibers under the same conditions (resin, additive, Vf, and the like).

Therefore, in the case of cold pressing, it is a problem how to prevent a decrease in temperature of an outermost layer (for example, layer Yc) containing carbon fibers. Therefore, in order to ensure the fluidity of the outermost layer (for example, layer Yc) containing carbon fibers during cold pressing, it is preferable to ensure that the layer is not brought into contact with the mold until immediately before the start of compression. For that purpose, it is preferable to place the molding material X in contact with the lower mold Mx and place the outermost layer (for example, layer Yc) containing carbon fibers in contact with the upper mold for pressing. In this case, the outermost layer (for example, the layer Yc) containing the carbon fibers does not come into contact with the mold until immediately before the upper mold is lowered to close the cavity of the mold, so that it is easy to prevent a decrease in temperature.

(Reason 2)

Since the material A contains carbon fibers, the appearance is beautiful, and when the material A is present on the surface, the appeal to the customer is high. In particular, when the molding material Y has a grain, the design is exceptional. In order to form the grain on the molding material Y, it is necessary to pressurize the molding material Y immediately after the molding material Y comes into contact with the mold My. Therefore, it is preferable that the mold My to be in contact with the molding material Y is an upper mold.

From the viewpoint of making the appearance of the molded body beautiful, the outermost layer when the molded body is formed is preferably the layer Yc.

2. Cold Pressing

In the cold pressing, for example, a molded body heated to a first predetermined temperature is put into a mold set to a second predetermined temperature, and then pressurized and cooled.

Specifically, when the matrix resins Rx and Ry contained in the molding material X and the molding material Y (possibly the other materials Z or the like) are the same kind of thermoplastic resin and are crystalline, the first predetermined temperature is equal to or higher than the melting point and the second predetermined temperature is less than the melting point. When the thermoplastic resins are the same kind of resin and are amorphous, the first predetermined temperature is equal to or higher than the glass transition temperature, and the second predetermined temperature is lower than the glass transition temperature.

When the matrix resins Rx and Ry are different types of thermoplastic resins, the first predetermined temperature is determined based on the higher melting point or glass transition temperature of the resin, and the second predetermined temperature is determined based on the lower melting point or glass transition temperature of the resin.

That is, the cold press method includes at least the following steps A1) to A2).

Step A1) heating the molding material to the first predetermined temperature

Step A2) placing the material heated in step A1) in a mold adjusted to the second predetermined temperature, and pressurizing the material

By performing these steps, the molding of the molded body can be completed.

Each of the above steps must be performed in the above order, but other steps may be included between each step. Examples of other steps include a shaping step, prior to step A2), of shaping the material in advance into a shape of a cavity of the mold using a shaping mold different from the mold used in step A2). Step A2) is a step of applying pressure to the material to obtain a molded body having a desired shape. The molding pressure at this time is not particularly limited, but is preferably less than 20 MPa, and more preferably 10 MPa or less with respect to a projected area of the mold cavity.

It should be understood that various steps may be taken between the above steps during cold pressing, and for example, vacuum press molding in which cold pressing is performed while being evacuated may be used.

[Mold for cold pressing]

1. Angle θ2

It is preferable that the mold Mx includes a mold surface S1 for forming the connecting wall and a mold surface S2 for forming the side wall, and an angle θ2 between S1 and S2 satisfies θ1 ≤ θ2, and more preferably satisfies θ1 < θ2.

For the angle θ2, an obtuse angle portion of the angle between S1 and S2 is measured. For example, in FIGS. 3A and 6A, an obtuse angle portion of the lower mold (mold Mx) with which the molding material X comes into contact is measured.

The mold cavity preferably has a wave shape in cross section, and the angle θ2 can be measured when the mold cavity is observed in the wave shape in cross section.

In addition, the mold cavity in FIGS. 3A and 6A have a plurality of θ2 at the same angle. When there are a plurality of angles θ2, and the angles are different from each other, the angle θ2 is the smallest angle among the angles between the mold surface S1 and the mold surface S2.

The range of θ2 is more preferably 0° < θ2 - θ1 < 10°, and still more preferably 0° < θ2 - θ1 < 5°. On the other hand, θ1 = θ2 may be satisfied.

2. Flatness Fc of mold cavity

2.1. The flatness Fc of the present invention is defined by the following procedures 1' to 5'.
(Procedure 1') The mold cavity is observed such that the mold to be in contact with the molding material X is the lower mold.

The mold cavity is preferably observed such that the mold to be in contact with the layer Xg is the lower mold.

(Procedure 2') The cross section of the mold cavity having a wave shape was observed, and the observation range of the mold cavity is cut out such that the length Lyc in the wave direction is 40 cm.
(Procedure 3') A mold surface for forming the lower wall is focused on.
(Procedure 4') Two parallel ideal straight lines are drawn with a minimum necessary width so that the mold surface for forming the lower wall is entirely disposed between the two parallel ideal straight lines.
(Procedure 5') The distance between the ideal straight lines is defined as the flatness Fc.

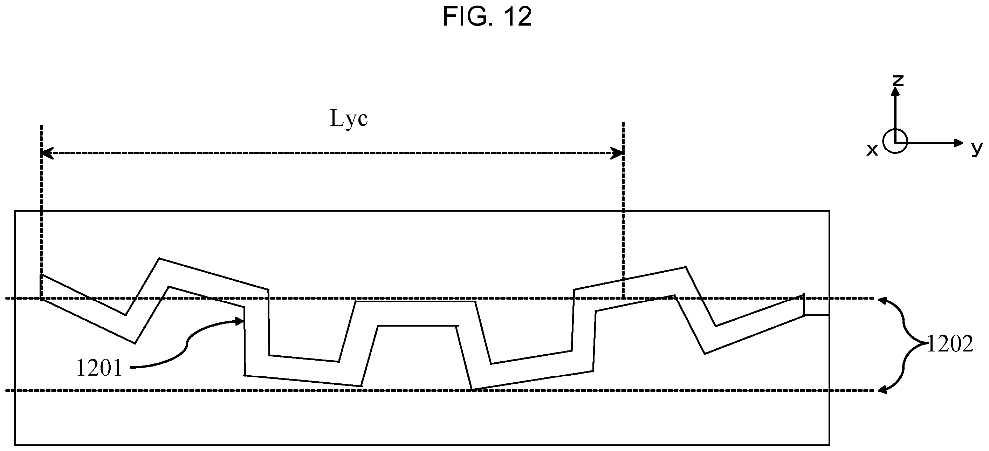

Procedure 1' to procedure 5' will be described with reference to FIG. 12.

In FIG. 12, the mold cavity is observed such that the mold Mx to be in contact with the molding material X is the lower mold. The Y-axis direction in FIG. 12 is the wave direction. The cross section of the mold cavity having the wave shape is observed, and the observation range of the mold cavity is cut out such that the length Lyc in the wave direction is 40 cm. The mold surface for forming the lower wall is 1201 in FIG. 12. As shown by 1202 in FIG. 12, the two parallel ideal straight lines are drawn such that the entire mold surface for forming the lower wall is disposed between the two parallel ideal straight lines and a distance between the two parallel ideal straight lines (1202) is minimized.

In the case where Fc changes depending on the location where the length Lyc in the wave direction is cut out, it is preferable to design Fc so as to satisfy Fa < Fc or formula (3) even at one location.

2.2. It is preferable that the flatness Fc of the mold cavity used for cold pressing satisfies Fa ≤ Fc. Fa < Fc means that the molded body is closer to a flat surface than the mold cavity. When there is a difference between the average molding shrinkage ratios of the molding material X and the molding material Y, and a molded body is produced into a wave shape by laminating the molding material X and the molding material Y, the layer with the large average molding shrinkage ratio pulls the layer with the small average molding shrinkage ratio. For example, in FIGS. 3B and 6B, immediately after the molded body is prepared, the molded body (an end portion of the molded body in the wave direction) warps downward with a lapse of time. As a result, the angle between the side wall and the connecting wall on the side where the molding material X is present in the surface layer changes between immediately after molding and after a lapse of a while, causing an angle change. In order to set the flatness Fa of the molded body within a target range, it is preferable to predict how much the flatness will change, adjust in advance such that the change of flatness is (Fc-Fa), and perform press molding.

EXAMPLES

The present invention will be specifically described below using Examples, but the present invention is not limited thereto.

1. Material

·Carbon fiber

Carbon fiber "Tenax" (registered trademark) STS40-24K (EP) (average fiber diameter: 7 $\mu$m, fineness: 1600 tex, density: 1.78 g/cm$^3$) manufactured by Teijin, Ltd.

·Glass fiber

Glass fiber E-glass RS 240QR-483 (count: 2400 g/1000 m) manufactured by Nitto Boseki Co., Ltd.

·Thermoplastic resin Rx

Polyamide 6 (A1030 manufactured by Unitika Ltd., sometimes abbreviated as PA6)

·Thermoplastic resin Ry

Polyamide 6 (A1030 manufactured by Unitika Ltd., sometimes abbreviated as PA6)

2. Measurement of materials

Each value in the present example was determined according to the following method.

(1) Measurement of fiber volume fraction (Vfx, Vfy) of fibers contained in molding material

A sample of 100 mm × 100 mm is cut out from the manufactured molding material X (or molding material Y).

(i) The weight of the molding material X (or molding material Y) is measured.
(ii) The mixture is heated in an electric furnace (FP410 manufactured by Yamato Scientific Co., Ltd.) heated to 550°C in a nitrogen atmosphere for 4 hours to burn off organic substances such as matrix resin, and the organic substances are weighed.
(iii) After (ii), the carbon fibers are burned off at 750°C for 5 hours, and the weight of the sample that becomes only the glass fibers is measured.

The weights of the resin, the carbon fiber, and the glass fiber are calculated by weighing the weights of (i) to (iii). Next, the volume fraction of the reinforcing fibers was calculated using the specific gravity of each component.

Formula (5) Fiber volume fraction Vfx = 100 × volume of reinforcing fibers/(volume of reinforcing fibers + volume of thermoplastic resin Rx of molding material X)  Formula (5):

Formula (6) Fiber volume fraction Vfy = 100 × volume of reinforcing fibers/(volume of reinforcing fibers + volume of thermoplastic resin Ry of molding material Y)  Formula (6):

(2) Calculation of average molding shrinkage of molding material

When placing the molding material in the mold, the mold is pre-marked and transferred to the molding material. In the marking, a total of 13 points are marked, one point at the center and 12 points on the circumference so as to draw a circle. The circle has a diameter of 300 mm, and markings of 12 points on a circumference are drawn such that a distance therebetween is uniform. At this time, six imaginary lines are drawn in the diameter direction into the mold (for example, FIG. 16).
In light of the formula (3), the six imaginary lines are the distance between the two points in the specific direction of Lti, and n = 6. Lti (i is 1 to 6) before transfer is measured by measuring a distance between two points in an i direction marked on a mold at a molding temperature, Lei after transfer is measured by measuring a distance between two points in the i direction marked on a molded body cooled to room temperature, and an average molding shrinkage is calculated from the above formula (3).

3. Cross-section observation

Cross sections of the molded body and the mold cavity were observed from a direction in which a wave shape could be observed. More specifically, observation was made from a direction (X-axis direction in FIGS. 1 and 4) that is perpendicular to the wave direction (Y-axis direction in FIGS. 1 and 4) and in which the wave shape could be observed. The direction for observation is also perpendicular to a plate thickness direction (Z-axis direction in FIGS. 1 and 4). In other words, observation of the wave shape was performed from a direction perpendicular to both the wave direction and the plate thickness direction.

(1) Flatness Fa of molded body

The flatness Fa was measured by the following procedure.
(Procedure 1) The molded body was left to stand such that the molding material X present in a surface layer was on a lower side.
Procedure 2) The cross section of the molded body was observed such that the cross section appeared to have a wave shape, and the observation range of the molded body was cut out such that the length Ly in the wave direction was 40 cm.
(Procedure 3) A bottom surface of a lower wall formed by the connecting wall was focused on.
(Procedure 4) Two parallel ideal straight lines were drawn with a minimum necessary width such that the bottom surface of the lower wall was entirely disposed between the two parallel ideal straight lines.
(Procedure 5) A distance between the ideal straight lines was defined as the flatness Fa.

(2) Flatness Fc of mold cavity

The flatness Fc was measured by the following procedure.

(Procedure 1') The mold cavity was observed such that the mold Mx to be in contact with the molding material X was the lower mold.
(Procedure 2') The cross section of the mold cavity having a wave shape was observed, and the observation range of the cavity of the mold was cut out such that the length Lyc in the wave direction was 40 cm.
(Procedure 3') A mold surface for forming the lower wall was focused on.
(Procedure 4') Two parallel ideal straight lines were drawn with a minimum necessary width so that the mold surface for forming the lower wall was entirely disposed between the two parallel ideal straight lines.
(Procedure 5') The distance between the ideal straight lines was defined as flatness Fc.

(3) Angle $\theta 1$

The cross section of the molded body having a wave shape was observed, all the angles between the side wall and the connecting wall on the side where the molding material X was present in the surface layer were measured, and the minimum angle was defined as an angle $\theta 1$.

(4) Angle $\theta 2$

An angle $\theta 2$ between a mold surface S1 for forming the connecting wall and a mold surface S2 for forming the side wall when the mold Mx was observed in cross section was designed according to each of Examples and Comparative Examples.

(5) Impact test (drop weight test)

The test conditions were as follows: a weight mass was 16 kg, and heights were adjusted such that an impact of 135J, 145J, 155J, and 165J was applied respectively, and the following evaluation was performed.
Perfect: No crack (crack in an in-plane direction) was observed on a surface opposite to a surface where the weight hit.
Excellent: Cracks of less than 10 mm (cracks in the in-plane direction) were generated on the surface opposite to the surface where the weight hit.
Good: Cracks of 10 mm or more (cracks in the in-plane direction) were generated on the surface opposite to the surface where the weight hit. Cracks (cracks in a plate thickness direction) were less than half the plate thickness.
Poor: Cracks of 10 mm or more (cracks in the in-plane direction) were generated on the surface opposite to the surface where the weight hit, and cracks (cracks in a plate thickness direction) were half or more the plate thickness.

[Example 1]

## 1. Preparation of molding material X

### 1.1. Preparation of layer Xc

Carbon fibers "Tenax" (registered trademark) STS40-24K (average fiber diameter: 7 μm, number of single fibers: 24.000) manufactured by Toho Tenax Co., Ltd. and cut to a fiber length of 20 mm were used as carbon fibers, and a Nylon 6 resin A1030 manufactured by Unitika Ltd. was used as a resin, and a composite composition of carbon fibers and Nylon 6 resin in which carbon fibers were two-dimensionally and randomly oriented was prepared based on a method described in US Patent No. 8946342. The obtained composite composition was heated at 2.0 MPa for 5 minutes in a press device heated to 260°C to obtain flat plate-shaped layer Xc of 475 mm × 350 mm having an average thickness of 0.18 mm,. Table 1 shows the analysis results of the carbon fibers contained in the layer Xc.

### 1.2. Preparation of layer Xg

Glass fiber E-glass RS 240QR-483 manufactured by Nitto Boseki Co., Ltd. was used as glass fibers, and a nylon 6 resin A1030 manufactured by Unitika Ltd. was used as a resin, and a composite composition of glass fibers and a nylon 6 resin in which glass fibers were two-dimensionally and randomly oriented was prepared according to a method described in US patent No. 8946342. The obtained composite composition was heated at 2.0 MPa for 5 minutes in a press device heated to 260°C to obtain a flat plate-shaped layer Xg of 475 mm × 350 mm having an average thickness of 0.32 mm. Table 1 shows the analysis results of the glass fibers contained in the layer Xg.

### 1.3. Laminated body Px

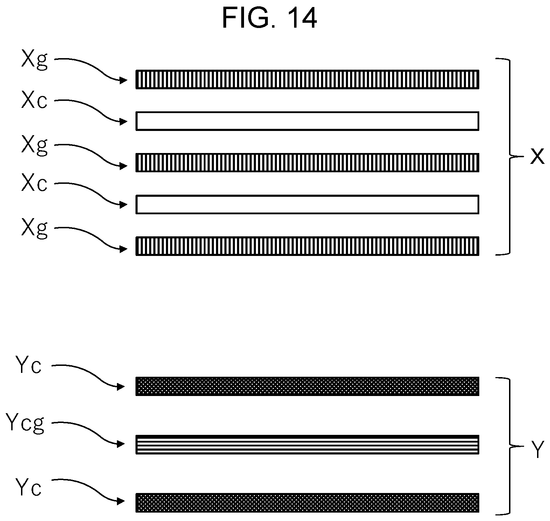

Laminated bodies Px were produced by lamination so as to be Xg/Xc/Xg/Xc/Xg as shown in Table 1. The layer Xg is simply referred to as Xg, and the layer Xc is simply referred to as Xc. The layer Xg is three layers, and the layer Xc is two layers. The obtained laminated body Px was used as the molding material X. FIG. 14 shows a laminated structure of the molding material X.

## 2. Preparation of molding material Y

### 2.1. Preparation of layer Yc

A carbon fiber "Tenax" (registered trademark) STS40-24K (average fiber diameter: 7 μm, number of single fibers: 24,000) manufactured by TEIJIN LIMITED and cut to a fiber length of 20 mm was used as the carbon fiber, and nylon 6 resin A1030 manufactured by Unitika Ltd. was used as the resin. Based on a method described in US Patent No. 8,946,342, a composite composition of the carbon fiber and the nylon 6 resin was prepared, in which carbon fibers were two-dimensionally and randomly oriented. The obtained composite composition was heated at 2.0 MPa for 5 minutes in a press device heated to 260°C to produce a flat plate-shaped material (layer Yc) of 475 mm × 350 mm having an average thickness of 0.8 mm. Table 1 shows the analysis results of the carbon fibers contained in the layer Yc.

### 2.2. Preparation of layer Ycg

An extra number of layers Xc were prepared, and the layers Xc were finely pulverized using a large low-speed plastic pulverizer to obtain a pulverized material. The obtained pulverized material and a nylon 6 resin A1030 manufactured by Unitika Ltd. were dry-blended so that the fiber volume fraction of the layer Ycg was a fiber volume fraction shown in Table 1, and the dry-blended product was melt-kneaded in a twin-screw extruder at 200°C and then extruded from a T-die. After that, the layer was cooled and solidified by being attracted by a chill roll at 60°C to obtain a layer Ycg having a thickness of 0.8 mm. Table 1 shows the analysis results of the layer Ycg.

### 2.3. Laminated body Py

As shown in Table 1, the laminated body Py was laminated so that the configuration is Yc/Ycg/Yc. The layer Yc is simply referred to as Yc, and the layer Ycg is simply referred to as Ycg. The obtained laminated body Py was used as the molding material Y. FIG. 14 shows a laminated structure of the molding material Y.

3. Preparation of mold

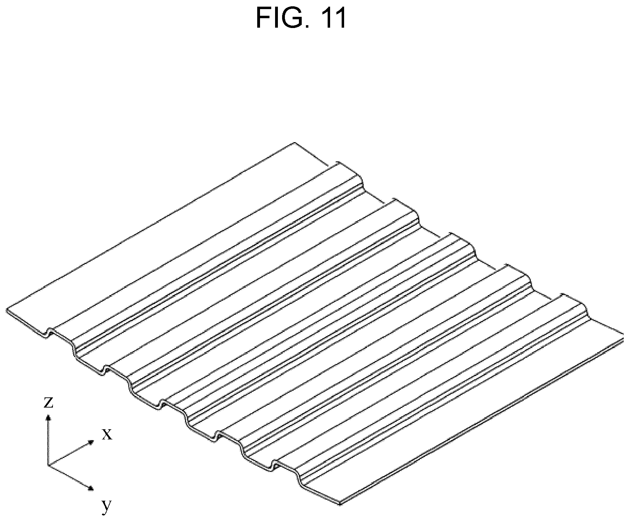

A mold for producing a molded body shown in FIG. 11 was prepared. A length of the molded body in the Y-axis direction was 40 cm, which was defined as Ly.

Here, the flatness Fc was set to 0 mm, the angle θ2 was set to 103° (the angles between S1 and S2 were all the same angle), the temperature ta of the mold My (upper mold) was set to 150°C, and the temperature tb of the mold Mx (lower mold) was set to 150°C.

4. Cold-pressing

The molding material X and the molding material Y were dried in a hot air dryer at 120°C for 4 hours, and then the molding material Y and the molding material X were laminated in order, and the temperature was increased to 290°C by an infrared heater. Since the molding material X and the molding material Y are symmetric materials, there is no front or back surface.

After that, the molding material was placed so that the molding material X was in contact with the mold Mx. At this time, a direction of 475 mm in the material (flat plate shape) of 475 mm × 350 mm was set as the wave direction. At the time of placing, preliminary shaping was performed by hand so as to follow the mold.

The upper mold was lowered, and the molding material Y and the molding material X were pressed at the same time for 1 minute at a pressing pressure of 20 MPa (a time of 1 second from the start of pressing until reaching 20 MPa) to produce a cold-pressed body (400 mm × 350 mm: wave direction (y-axis direction in FIG. 11) × direction orthogonal to the wave direction (x-axis direction in FIG. 11)).

After one hour from the completion of the cold-pressing, the molded body had a wave shape shown in FIG. 11. In the molded body, the height h of the side wall was 12 mm, the length of the upper wall was 23 mm, and the length of the lower wall was 25 mm.

Both the upper wall and the lower wall were connecting wall, and the molded body was observed so that the molding material X is on the lower side, and the length was measured by defining the upper wall and the lower wall.

The impact test (drop weight test) is performed such that the layer Yc is a surface to be subjected to the impact. In other words, the layer Xg is opposite to the surface to be subjected to the impact.

Table 1 shows the results. The flatness Fa was as very high as 2.0 mm, and the warpage of the molded body was small. The state of warpage (the direction of warpage) was convex upward when the molding material X was left to stand on a desk so as to be in contact with the desk. (Since FIG. 10 is depicted as being convex downward, it is convex in a direction opposite thereto).

[Example 2]

When preparing the layer Ycg, a molded body was produced in the same manner as in Example 1 except that an extra number of layers Xg were prepared instead of the layer Xc, and the layers Xg were finely pulverized using a large low-speed plastic pulverizer and used. Table 1 shows the results.

[Example 3]

A molded body was produced in the same manner as in Example 1 except that the molding material Y was produced as follows. In Example 3, the average molding shrinkage (X) of the molding material X was relatively larger than the average molding shrinkage (Y), and a slight warpage occurred as a result of the molding material X slightly pulling the molding material Y. Table 1 shows the results.

<Preparation of molding material Y>

A carbon fiber "Tenax" (registered trademark) STS40-24K (average fiber diameter: 7 μm, number of single fibers: 24,000) manufactured by TEIJIN LIMITED and cut to a fiber length of 20 mm was used as the carbon fiber, and nylon 6 resin A1030 manufactured by Unitika Ltd. was used as the resin. Based on a method described in US Patent No. 8,946,342, a composite composition of the carbon fiber and the nylon 6 resin was prepared, in which carbon fibers were randomly oriented in two dimensions. The obtained composite composition was heated at 2.0 MPa for 5 minutes in a press machine heated to 260°C to obtain a flat plate-shaped material of 475 mm × 350 mm having an average thickness of 2.4 mm. This was used as the layer Yc, and only the layer Yc was used as the molding material Y.

[Comparative Example 1]

Molded bodies were produced in the same manner as in Example 1 except that the molding material X and the molding material Y were produced as follows. In Comparative Example 1, the average molding shrinkage (X) of the molding material X was much larger than the average molding shrinkage (Y), and a large warpage occurred as a result of the molding material X slightly pulling the molding material Y. Table 1 shows the results.

1. Preparation of molding material X

Glass fiber E-glass RS 240QR-483 manufactured by Nitto Boseki Co., Ltd. was used as glass fibers, and a nylon 6 resin A1030 manufactured by Unitika Ltd. was used as a resin, and a composite composition of glass fibers and a nylon 6 resin in which glass fibers were randomly oriented in two dimensions was prepared according to a method described in US patent No. 8946342. The obtained composite composition was heated at 2.0 MPa for 5 minutes in a press device heated to 260°C to obtain a flat plate-shaped layer Xg of 475mm × 350 mm having an average thickness of 1.3 mm.

Only the layer Xg was used as the molding material X, and the layer Xc was not used. Table 1 shows the analysis results of the glass fibers contained in the layer Xg.

2. Preparation of molding material Y

A carbon fiber "Tenax" (registered trademark) STS40-24K (average fiber diameter: 7 μm, number of single fibers: 24,000) manufactured by TEIJIN LIMITED and cut to a fiber length of 20 mm was used as the carbon fiber, and nylon 6 resin A1030 manufactured by Unitika Ltd. was used as the resin. Based on a method described in US Patent No. 8,946,342, a composite composition of the carbon fiber and the nylon 6 resin was prepared, in which carbon fibers were randomly oriented in two dimensions. The obtained composite composition was heated at 2.0 MPa for 5 minutes in a press machine heated to 260°C to obtain a flat plate-shaped material of 475 mm × 350 mm having an average thickness of 2.4 mm. This was used as the layer Yc, and only the layer Yc was used as the molding material Y.

[Example 4]

A molded body was produced in the same manner as in Example 1 except that the molding material X was prepared as follows.

(1) Carbon fiber "Tenax" (registered trademark) STS40-24K (average fiber diameter: 7 μm, number of monofilaments: 24,000) manufactured by Teijin Limited and cut to a fiber length of 20 mm was used as the carbon fiber.
(2) Carbon fibers and glass fibers were mixed by arranging one carbon fiber "Tenax" (registered trademark) STS40-24K (EP, 1600 tex), manufactured by Teijin Limited, and two glass fibers E-glass RS 240QR-483 (2400 tex), manufactured by Nitto Boseki Co., Ltd., and simultaneously cutting and spraying carbon fibers and glass fibers, and a composite composition of carbon fibers and a nylon 6 resin in which carbon fibers and glass fibers were two-dimensionally and randomly oriented was prepared based on a method described in US Patent No. 8946342.

The obtained composite composition was heated at 2.0 MPa for 5 minutes in a press device heated to 260°C to obtain a flat plate-shaped molding material X of 475mm × 350mm having an average thickness of 1.3 mm. Table 2 shows the analysis results of the carbon fibers contained in the molding material X. A molding material X is produced in the same manner as in Example 1 except that the carbon fiber and the glass fiber are mixed together without using the laminated body Px. FIG. 15 shows a layer structure of the molding material X and the molding material Y. As shown in FIG. 15, the molding material X is a single layer, and carbon fibers and glass fibers are mixed in the same layer Xm.

[Example 5]

When preparing the layer Ycg, a molded body was produced in the same manner as in Example 4 except that an extra number of layers Xg were prepared instead of the layer Xc, and the layers Xg were finely pulverized using a large low-speed plastic pulverizer and used. Table 2 shows the results.

[Example 6]

A molded body was produced in the same manner as in Example 4 except that the molding material Y was produced as follows. Table 2 shows the results.

<Preparation of molding material Y>

A carbon fiber "Tenax" (registered trademark) STS40-24K (average fiber diameter: 7 $\mu$m, number of single fibers: 24,000) manufactured by TEIJIN LIMITED and cut to a fiber length of 20 mm was used as the carbon fiber, and nylon 6 resin A1030 manufactured by Unitika Ltd. was used as the resin. Based on a method described in US Patent No. 8,946,342, a composite composition of the carbon fiber and the nylon 6 resin was prepared, in which carbon fibers were randomly oriented in two dimensions. The obtained composite composition was heated at 2.0 MPa for 5 minutes in a press machine heated to 260°C to obtain a flat plate-shaped material of 475 mm $\times$ 350 mm having an average thickness of 2.4 mm. This was used as the layer Yc, and only the layer Yc was used as the molding material Y.

[Comparative Example 2]

The molding material X was not used, and a molded body was produced using only the molding material Y. The molding material Y was produced as follows.

<Preparation of molding material Y>

A carbon fiber "Tenax" (registered trademark) STS40-24K (average fiber diameter: 7 $\mu$m, number of single fibers: 24,000) manufactured by TEIJIN LIMITED and cut to a fiber length of 20 mm was used as the carbon fiber, and nylon 6 resin A1030 manufactured by Unitika Ltd. was used as the resin. Based on a method described in US Patent No. 8,946,342, a composite composition of the carbon fiber and the nylon 6 resin was prepared, in which carbon fibers were randomly oriented in two dimensions. The obtained composite composition was heated at 2.0 MPa for 5 minutes in a press device heated to 260°C to obtain a flat plate-shaped layer Yc of 475 mm $\times$ 350 mm having an average thickness of 3.7 mm. In addition, only the layer Yc was used as the molding material Y.

[Two-dimensional orientation and three-dimensional orientation]

The reinforcing fibers in the molding material X in Examples and Comparative Examples are dispersed two-dimensionally randomly. Similarly, the reinforcing fibers of the Xc layer, the Xg layer, and the Yc layer are dispersed two-dimensionally randomly.
On the other hand, the layer Ycg is randomly dispersed in a three-dimensional direction.

[Table 1]

| | Example 1 | Example 2 | Example 3 | Comparative Example 1 |
|---|---|---|---|---|
| Molding material X (shrinkage control material) | | | | |
| Thickness (mm) | 1.3 | 1.3 | 1.3 | 1.3 |
| Carbon fiber Cx / Glass fiber Gx (volume ratio) | 0.37 | 0.37 | 0.37 | 0 |
| Layer configuration (laminated body Px) | Xg/Xc/Xg/Xc/Xg Xg: 3 layers, Xc: 2 layers | Xg/Xc/Xg/Xc/Xg Xg: 3 layers, Xc: 2 layers | Xg/Xc/Xg/Xc/Xg Xg: 3 layers, Xc: 2 layers | Xg |
| Average molding shrinkage (X) (%) | 0.08 | 0.08 | 0.08 | 0.15 |

(continued)

| | | Example 1 | Example 2 | Example 3 | Comparative Example 1 |
|---|---|---|---|---|---|
| Molding material X (shrinkage control material) | | | | | |
| Layer Xc | Thickness (mm) | 0.18 | 0.18 | 0.18 | |
| | Carbon fiber Cx | STS40 | STS40 | STS40 | |
| | Weight average fiber length (mm) | 20 | 20 | 20 | |
| | Carbon fibers Cx1: Carbon fibers Cx2 | 10:90 | 10:90 | 10:90 | |
| | Volume fraction (Vol%) of the carbon fibers Cx2 to the carbon fibers Cx | 90 | 90 | 90 | |
| | Fiber volume fraction Vf (Vol%) | 40 | 40 | 40 | |
| | Matrix resin Rx | PA6 | PA6 | PA6 | |
| Layer Xg (Oppos ite surface to surface receivi ng impact) | Thickness (mm) | 0.32 | 0.32 | 0.32 | 0.32 |
| | Glass fiber Gx | RS240QR-483 | RS240QR-483 | RS240QR-483 | RS240QR-483 |
| | Weight average fiber length (mm) | 20 | 20 | 20 | 20 |
| | Fiber volume fraction Vf (Vol%) | 40 | 40 | 40 | 40 |
| | Matrix resin Rx | PA6 | PA6 | PA6 | PA6 |
| Molding material Y | | | | | |
| | Average molding shrinkage (Y) (%) | 0.06 | 0.06 | 0.01 | 0.01 |
| | Thickness (mm) | 2.4 | 2.4 | 2.4 | 2.4 |
| | Layer configuration | Yc/Ycg/Yc | Yc/Ycg/Yc | Yc | Yc |
| Layer Yc (Surface Receiving Impact) | Thickness (mm) | 0.8 | 0.8 | - | - |
| | Carbon fiber Cy | STS40 | STS40 | UTS40 | UTS40 |
| | Weight average fiber length (mm) | 20 | 20 | 20 | 20 |
| | Carbon fibers Cy1: Carbon fibers Cy2 | 10:90 | 10:90 | 10:90 | 10:90 |
| | Volume fraction (Vol%) of the carbon fibers Cyc2 to the carbon fibers Cyc | 90 | 90 | 90 | 90 |
| | Fiber volume fraction Vf (Vol%) | 25 | 25 | 35 | 35 |
| | Matrix resin Ry | PA6 | PA6 | PA6 | PA6 |

(continued)

| Molding material Y | | | | | | |
|---|---|---|---|---|---|---|
| Layer Ycg | Thickness (mm) | 0.8 | 0.8 | | | |
| | Reinforcing fibers | Carbon fiber | Glass fiber | | | |
| | Weight average fiber length (mm) | 0.2 | 0.2 | | | |
| | Fiber volume fraction Vf (Vol%) | 25 | 25 | | | |
| | Matrix resin Ry | PA6 | PA6 | | | |
| Molded body | | | | | | |
| | Flatness Fa (mm) | 2 | 1.5 | 7 | 13 | |
| | Warp shape | Convex upward | Convex upward | Convex upward | Convex upward | |
| | h (mm) | 12 | 12 | 12 | 12 | |
| | Fa/h | 0.17 | 0.125 | 0.6 | 1.1 | |
| | Impact test | | | | | |
| | 135J | Perfect | Perfect | Perfect | Perfect | |
| | 145J | Perfect | Perfect | Perfect | Perfect | |
| | 155J | Perfect | Perfect | Perfect | Perfect | |
| | 165J | Excellent | Excellent | Excellent | Excellent | |

[Table 2]

| | | Example 4 | Example 5 | Example 6 | Comparativ e Example 2 |
|---|---|---|---|---|---|
| Molding material X (shrinkage control material) | | | | | |
| | Thickness (mm) | 1.3 | 1.3 | 1.3 | |
| | Carbon fiber Cx / glass fiber Gx (volume ratio) | 0.37 | 0.37 | 0.37 | |
| | Mixing | - | - | - | |
| | Average molding shrinkage (X) (%) | 0.08 | 0.08 | 0.08 | |
| Carbon fibers CFx | Thickness (mm) | | | | |
| | Carbon fiber Cx | STS40 | STS40 | STS40 | |
| | Weight average fiber length (mm) | 20 | 20 | 20 | |
| | Carbon fibers Cx1 : Carbon fibers Cx2 | 10:90 | 10:90 | 10:90 | |
| | Volume ratio (Vol%) of the carbon fibers Cx2 to the carbon fibers Cx | 90 | 90 | 90 | |
| | Fiber volume fraction Vf (Vol%) | 11 | 11 | 11 | |
| | Matrix resin Rx | PA6 | PA6 | PA6 | |
| Glass fibers GFx | Thickness (mm) | | | | |
| | Glass fiber Gx | RS240Q-R-483 | RS240Q-R-483 | RS240Q-R-483 | |
| | Weight average fiber length (mm) | 20 | 20 | 20 | |
| | Fiber volume fraction Vf (Vol%) | 29 | 29 | 29 | |
| | Matrix resin Rx | PA6 | PA6 | PA6 | |
| | | Example 4 | Example 5 | Example 6 | Comparative Example 2 |
| Molding material Y | | | | | |
| | Average molding shrinkage (Y) (%) | 0.06 | 0.06 | 0.01 | 0.01 |
| | Thickness (mm) | 2.4 | 2.4 | 2.4 | 3.7 |
| | Layer configuration | Yc/Ycg/Yc | Yc/Ycg/Yc | Yc | Yc |
| Layer Yc (Surface Receiving Impact) | Thickness (mm) | 0.8 | 0.8 | - | - |
| | Carbon fiber Cy | STS40 | STS40 | UTS40 | UTS40 |
| | Weight average fiber length (mm) | 20 | 20 | 20 | 20 |
| | Carbon fibers Cy1 : Carbon fibers Cy2 | 10:90 | 10:90 | 10:90 | 10:90 |
| | Volume fraction (Vol%) of the carbon fibers Cyc2 to the carbon fibers Cyc | 90 | 90 | 90 | 90 |
| | Fiber volume fraction Vf (Vol%) | 25 | 25 | 35 | 35 |
| | Matrix resin Ry | PA6 | PA6 | PA6 | PA6 |

(continued)

| | | Example 4 | Example 5 | Example 6 | Comparative Example 2 |
|---|---|---|---|---|---|
| Molding material Y | | | | | |
| Layer Ycg | Thickness (mm) | 0.8 | 0.8 | | |
| | Reinforcing fibers | Carbon fiber | Glass fiber | | |
| | Weight average fiber length mm | 0.2 | 0.2 | | |
| | Fiber volume fraction Vf (Vol%) | 25 | 25 | | |
| | Matrix resin Ry | PA6 | PA6 | | |
| Molded body | | | | | |
| | Flatness Fa (mm) | 2 | 1.5 | 7 | 0.5 |
| | Warp shape | Convex upward | Convex upward | Convex upward | Convex upward |
| | h (mm) | 12 | 12 | 12 | 15 |
| | Fa/h | 0.17 | 0.125 | 0.6 | 0 |
| | Impact test | | | | |
| | 135J | Perfect | Perfect | Perfect | Excellent |
| | 145J | Perfect | Perfect | Perfect | Good |
| | 155J | Perfect | Perfect | Perfect | Poor |
| | 165J | Excellent | Excellent | Excellent | Poor |

This application is based on Japanese Patent Application No 2021-163769 filed on October 4, 2021.

INDUSTRIAL APPLICABILITY

The molded body of the present invention and the molded body obtained by molding the molded body are used in various constituent members, for example, structural members of automobiles, various electric products, frames and housings of machines, and all other parts where impact absorbing is desired. Particularly preferably, it can be used as an automobile part.

REFERENCE SIGNS LIST

Y: Molding material Y
X: Molding material X
101, 401: Side wall
102: Connecting wall
402: Connecting wall of upper wall (molding material X is disposed on lower side and observed)
403: Connecting wall of lower wall (molding material X is disposed on lower side and observed)
X: X-axis direction
Y: Y-axis direction
Z: Z-axis direction
θ1: Angle between side wall and connecting wall
θ2: Angle between mold surface S1 for forming connecting wall and mold surface S2 for forming side wall in mold MB
θ3: Angle between the side wall and the connecting wall in a state in which the molded body is stress-deformed to reduce the angle θ1 and the molded body is joined
Mx: Mold to be in contact with molding material X
My: Mold to be in contact with molding material Y

701: Rib
801: Force for stress-deformation
802: Other component for joining
901: Two parallel ideal straight lines
902: Lower wall of connecting wall
903: Bottom surface of lower wall
Ly: Length in wave direction (40 cm)
h: Height of side wall
Lyc: Length in wave direction (40 cm)
1201: Mold surface for forming lower wall
1202: Two parallel ideal straight lines
1601: Mold
1602: Marking
T1, T2: Molded body

**Claims**

1. A method for producing a molded body by laminating and cold-pressing a molding material X and a molding material Y, wherein:

   the molding material X contains discontinuous carbon fibers Cx, discontinuous glass fibers Gx, and a matrix resin Rx, the carbon fibers Cx containing carbon fibers Cx1 having a fiber width of less than 0.3 mm and carbon fibers Cx2 having a fiber width of 0.3 mm or more and 3.0 mm or less;
   a volume ratio of the carbon fibers Cx2 to the carbon fibers Cx is 10 Vol% or more and less than 99 Vol%;
   a volume ratio of the carbon fibers Cx / the glass fibers Gx is 0.1 or more and 1.5 or less;
   an average molding shrinkage X in an in-plane direction of the molding material X satisfies the following formula (1);
   the molding material Y contains discontinuous carbon fibers Cy and/or glass fibers Gy, and a matrix resin Ry; and
   an average molding shrinkage Y of the molding material Y in an in-plane direction satisfies the following formula (2):

   $$\text{Formula (1): Average molding shrinkage } X \leq 0.12\%$$

   $$\text{Formula (2): } 0.1 < \text{average molding shrinkage } Y/\text{average } X < 1.5.$$

2. The method for producing a molded body according to claim 1, wherein a weight average fiber length of the carbon fibers Cx is 1 mm or more and 100 mm or less, and a weight average fiber length of the glass fibers Gx is 1 mm or more and 100 mm or less.

3. The method for producing a molded body according to claim 1 or 2, wherein the molding material X is a molding material in which the carbon fibers Cx and the glass fibers Gx are mixed in a same layer.

4. The method for producing a molded body according to any one of claims 1 to 3, wherein at least one outermost layer when the molded body is formed contains the glass fibers Gx.

5. The method for producing a molded body according to any one of claims 1 to 4, wherein the molding material X is a laminated body Px in which a layer Xc and a layer Xg are laminated, the layer Xc contains the carbon fibers Cx, and the layer Xg contains the glass fibers Gx.

6. The method for producing a molded body according to claim 5, wherein at least one outermost layer when the molded body is formed is the layer Xg.

7. The method for producing a molded body according to any one of claims 1 to 6, wherein the molding material Y is a laminated body Py in which a layer Yc and a layer Ycg are laminated, the layer Yc contains discontinuous carbon fibers Cyc, and the layer Ycg contains carbon fibers Cycg and/or the glass fibers Gy.

8. The method for producing a molded body according to claim 7, wherein at least one outermost layer when the molded body is formed is the layer Yc.

9. The method for producing a molded body according to claim 8, wherein the laminated body Py has a three-layer structure of the layer Yc/the layer Ycg/the layer Yc.

10. The method for producing a molded body according to claim 9, wherein a weight average fiber length of the carbon fibers Cyc contained in the layer Yc is longer than a weight average fiber length of the carbon fibers Cycg and/or the glass fibers Gy contained in the layer Ycg.

11. The method for producing a molded body according to any one of claims 1 to 10, wherein at least one of the carbon fibers Cx, the glass fibers Gx, the carbon fibers Cy, and the glass fibers Gy are recycled fibers.

12. The method for producing a molded body according to any one of claims 1 to 11, wherein the matrix resin Rx contained in the molding material X and the matrix resin Ry contained in the molding material Y are thermoplastic resins.

13. The method for producing a molded body according to any one of claims 1 to 12, wherein the molded body is an impact-resistant member, and the molding material Y is a side to be subjected to an impact.

14. The method for manufacturing a molded body according to claim 13, wherein the molding material Y is a laminated body Py in which a layer Yc and a layer Ycg are laminated, the molded body is an impact-resistant member, and the layer Yc is a side to be subjected to an impact.

15. The method for producing a molded body according to any one of claims 1 to 14, wherein the molding material X and the molding material Y have a flat plate shape.

16. The method for producing a molded body according to any one of claims 1 to 15, wherein a thickness 1x of the molding material X is 0.5 mm or more and 5.0 mm or less, and a thickness ly of the molding material Y is 0.5 mm or more and less than 5.0 mm.

**Patentansprüche**

1. Verfahren zur Herstellung eines Formkörpers durch Laminieren und Kaltpressen einer Formmasse X und einer Formmasse Y, wobei:

die Formmasse X diskontinuierliche Kohlenstofffasern Cx, diskontinuierliche Glasfasern Gx und ein Matrixharz Rx enthält, wobei die Kohlenstofffasern Cx Kohlenstofffasern Cx1 mit einer Faserbreite von weniger als 0,3 mm und Kohlenstofffasern Cx2 mit einer Faserbreite von 0,3 mm oder mehr und 3,0 mm oder weniger enthalten; ein Volumenverhältnis der Kohlenstofffasern Cx2 zu den Kohlenstofffasern Cx 10 Vol.-% oder mehr und weniger als 99 Vol.-% beträgt; ein Volumenverhältnis der Kohlenstofffasern Cx zu den Glasfasern Gx 0,1 oder mehr und 1,5 oder weniger beträgt; eine mittlere Formschrumpfung X in einer in der Ebene liegenden Richtung der Formmasse X folgende Formel (1) erfüllt; die Formmasse Y diskontinuierliche Kohlenstofffasern Cy und/oder Glasfasern Gy und ein Matrixharz Ry enthält; und eine mittlere Formschrumpfung Y der Formmasse Y in einer in der Ebene liegenden Richtung folgende Formel (2) erfüllt:

$$\text{Formel (1): Mittlere Formschrumpfung X} \leq 0{,}12\%$$

0,1 < mittlere Formschrumpfung Y / mittlere Formschrumpfung X < 1,5. Formel (2):

2. Verfahren zur Herstellung eines Formkörpers nach Anspruch 1,
wobei eine gewichtsgemittelte Faserlänge der Kohlenstofffasern Cx gleich 1 mm oder mehr und 100 mm oder weniger und eine gewichtsgemittelte Faserlänge der Glasfasern Gx gleich 1 mm oder mehr und 100 mm oder weniger beträgt.

3. Verfahren zur Herstellung eines Formkörpers nach Anspruch 1 oder 2, wobei die Formmasse X eine Formmasse ist, in der die Kohlenstofffasern Cx und die Glasfasern Gx in derselben Schicht vermischt sind.

4. Verfahren zur Herstellung eines Formkörpers nach einem der Ansprüche 1 bis 3, wobei zumindest eine äußerste Schicht, wenn der Formkörper gebildet ist, die Glasfasern Gx enthält.

5. Verfahren zur Herstellung eines Formkörpers nach einem der Ansprüche 1 bis 4, wobei es sich bei der Formmasse X um einen laminierten Körper Px handelt, in dem eine Schicht Xc und eine Schicht Xg laminiert sind, wobei die Schicht Xc die Kohlenstofffasern Cx und die Schicht Xg die Glasfasern Gx enthält.

6. Verfahren zur Herstellung eines Formkörpers nach Anspruch 5, wobei zumindest eine äußerste Schicht, wenn der Formkörper gebildet ist, die Schicht Xg ist.

7. Verfahren zur Herstellung eines Formkörpers nach einem der Ansprüche 1 bis 6, wobei es sich bei der Formmasse Y um einen laminierten Körper Py handelt, in dem eine Schicht Yc und eine Schicht Ycg laminiert sind, wobei die Schicht Yc diskontinuierliche Kohlenstofffasern Cyc und die Schicht Ycg Kohlenstofffasern Cycg und/oder die Glasfasern Gy enthält.

8. Verfahren zur Herstellung eines Formkörpers nach Anspruch 7, wobei zumindest eine äußerste Schicht, wenn der Formkörper gebildet ist, die Schicht Yc ist.

9. Verfahren zur Herstellung eines Formkörpers nach Anspruch 8, wobei der laminierte Körper Py einen dreischichtigen Aufbau aus der Schicht Yc, der Schicht Ycg und der Schicht Yc hat.

10. Verfahren zur Herstellung eines Formkörpers nach Anspruch 9, wobei eine gewichtsgemittelte Faserlänge der Kohlenstofffasern Cyc, die in der Schicht Yc enthalten sind, länger ist als eine gewichtsgemittelte Faserlänge der Kohlenstofffasern Cycg und/oder der Glasfasern Gy, die in der Schicht Ycg enthalten sind.

11. Verfahren zur Herstellung eines Formkörpers nach einem der Ansprüche 1 bis 10, wobei es sich bei den Kohlenstofffasern Cx und/oder den Glasfasern Gx und/oder den Kohlenstofffasern Cy und/oder den Glasfasern Gy um recycelte Fasern handelt.

12. Verfahren zur Herstellung eines Formkörpers nach einem der Ansprüche 1 bis 11, wobei es sich bei dem in der Formmasse X enthaltenen Matrixharz Rx und bei dem in der Formmasse Y enthaltenen Matrixharz Ry um thermoplastische Harze handelt.

13. Verfahren zur Herstellung eines Formkörpers nach einem der Ansprüche 1 bis 12, wobei der Formkörper ein schlagfestes Element ist und die Formmasse Y eine Seite darstellt, die einem Schlag ausgesetzt ist.

14. Verfahren zur Herstellung eines Formkörper nach Anspruch 13, wobei es sich bei der Formmasse Y um einen laminierten Körper Py handelt, in dem eine Schicht Yc und eine Schicht Ycg laminiert sind, der Formkörper ein schlagfestes Element ist und die Schicht Yc eine Seite darstellt, die einem Schlag ausgesetzt ist.

15. Verfahren zur Herstellung eines Formkörpers nach einem der Ansprüche 1 bis 14, wobei die Formmasse X und die Formmasse Y eine flache Plattenform haben.

16. Verfahren zur Herstellung eines Formkörpers nach einem der Ansprüche 1 bis 15, wobei eine Dicke lx der Formmasse X gleich 0,5 mm oder mehr und 5,0 mm oder weniger beträgt, und eine Dicke ly der Formmasse Y gleich 0,5 mm oder mehr und weniger als 5,0 mm beträgt.

**Revendications**

1. Procédé de fabrication d'un corps moulé par laminage et pressage à froid d'un matériau de moulage X et d'un matériau de moulage Y, sachant que :

le matériau de moulage X contient des fibres de carbone discontinues Cx, des fibres de verre discontinues Gx et une résine matricielle Rx, les fibres de carbone Cx comprenant des fibres de carbone Cx1 ayant une largeur de fibre inférieure à 0,3 mm et des fibres de carbone Cx2 ayant une largeur de fibre de 0,3 mm ou plus et de 3,0 mm ou moins ;

le rapport volumique des fibres de carbone Cx2 aux fibres de carbone Cx étant de 10 % en volume ou plus et inférieur à 99 % en volume ;

le rapport volumique des fibres de carbone Cx aux fibres de verre Gx étant de 0,1 ou plus et inférieur à 1,5 ;

un rétrécissement moyen de forme X dans une direction de plan du matériau de moulage X satisfait à la formule (1) suivante ;

le matériau de moulage Y contient des fibres de carbone discontinues Cy et/ou des fibres de verre Gy et une résine matricielle Ry ; et

un rétrécissement moyen de forme Y du matériau de moulage Y dans une direction de plan satisfait à la formule (2) suivante :

```
Formule (1) : rétrécissement moyen de forme X ≤ 0,12 %
```

0,1 < rétrécissement moyen de forme Y / rétrécissement moyen de forme X < 1,5.         Formule (2) :

2. Le procédé de fabrication d'un corps moulé selon la revendication 1,
sachant qu'une longueur de fibre moyenne en poids des fibres de carbone Cx est égale à 1 mm ou plus et à 100 mm ou moins, et qu'une longueur de fibre moyenne en poids des fibres de verre Gx est égale à 1 mm ou plus et à 100 mm ou moins.

3. Le procédé de fabrication d'un corps moulé selon la revendication 1 ou 2, sachant que le matériau de moulage X est un matériau de moulage dans lequel les fibres de carbone Cx et les fibres de verre Gx sont mélangées dans la même couche.

4. Le procédé de fabrication d'un corps moulé selon l'une des revendications 1 à 3, sachant qu'au moins une couche la plus externe, lorsque le corps moulé est formé, contient les fibres de verre Gx.

5. Le procédé de fabrication d'un corps moulé selon l'une des revendications 1 à 4, sachant que le matériau de moulage X est un corps stratifié Px dans lequel une couche Xc et une couche Xg sont stratifiées, la couche Xc contenant les fibres de carbone Cx et la couche Xg contenant les fibres de verre Gx.

6. Le procédé de fabrication d'un corps moulé selon la revendication 5, sachant qu'au moins une couche la plus externe, lorsque le corps moulé est formé, est la couche Xg.

7. Le procédé de fabrication d'un corps moulé selon l'une des revendications 1 à 6, sachant que le matériau de moulage Y est un corps stratifié Py dans lequel une couche Yc et une couche Ycg sont stratifiées, la couche Yc contenant des fibres de carbone discontinues Cyc et la couche Ycg contenant des fibres de carbone Cycg et/ou les fibres de verre Gy.

8. Le procédé de fabrication d'un corps moulé selon la revendication 7, sachant qu'au moins une couche la plus externe, lorsque le corps moulé est formé, est la couche Yc.

9. Le procédé de fabrication d'un corps moulé selon la revendication 8, sachant que le corps stratifié Py a une structure à trois couches constituée de la couche Yc, de la couche Ycg et de la couche Yc.

10. Le procédé de fabrication d'un corps moulé selon la revendication 9, sachant qu'une longueur de fibre moyenne en poids des fibres de carbone Cyc contenues dans la couche Yc est supérieure à une longueur de fibre moyenne en poids des fibres de carbone Cycg et/ou des fibres de verre Gy contenues dans la couche Ycg.

11. Le procédé de fabrication d'un corps moulé selon l'une des revendications 1 à 10, sachant que les fibres de carbone Cx et/ou les fibres de verre Gx et/ou les fibres de carbone Cy et/ou les fibres de verre Gy sont des fibres recyclées.

12. Le procédé de fabrication d'un corps moulé selon l'une des revendications 1 à 11, sachant que la résine matricielle Rx contenue dans le matériau de moulage X et la résine matricielle Ry contenue dans le matériau de moulage Y sont des résines thermoplastiques.

13. Le procédé de fabrication d'un corps moulé selon l'une des revendications 1 à 12, sachant que le corps moulé est un élément résistant aux chocs et que le matériau de moulage Y représente une face exposée à un choc.

14. Le procédé de fabrication d'un corps moulé selon la revendication 13, sachant que le matériau de moulage Y est un corps stratifié Py dans lequel une couche Yc et une couche Ycg sont stratifiées, que le corps moulé est un élément résistant aux chocs et que la couche Yc représente une face exposée à un choc.

15. Le procédé de fabrication d'un corps moulé selon l'une des revendications 1 à 14, sachant que le matériau de moulage X et le matériau de moulage Y ont une forme de plaque plate.

16. Le procédé de fabrication d'un corps moulé selon l'une des revendications 1 à 15, sachant qu'une épaisseur lx du matériau de moulage X est égale à 0,5 mm ou plus et inférieure ou égale à 5,0 mm, et qu'une épaisseur ly du matériau de moulage Y est égale à 0,5 mm ou plus et inférieure à 5,0 mm.

# FIG. 1

# FIG. 2A

# FIG. 2B

# FIG. 3A

# FIG. 3B

EP 4 414 152 B1

# FIG. 4

FIG. 5A

FIG. 5B

## FIG. 6A

M y

IVI x

## FIG. 6B

θ2 θ2

θ2 θ2

θ2 θ2

θ2 θ2

T 2

FIG. 7A

701

FIG. 7B

701

701

701

## FIG. 8A

## FIG. 8B

EP 4 414 152 B1

FIG. 9A

901

FIG. 9B

902

FIG. 9C

903

EP 4 414 152 B1

FIG. 10

EP 4 414 152 B1

# FIG. 11

FIG. 12

# FIG. 13

EP 4 414 152 B1

# FIG. 14

Xg

Xc

Xg

Xc

Xg

X

Yc

Ycg

Yc

Y

FIG. 15

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014019707 A
- JP 2018043412 A
- WO 2018052080 A1
- US 9650003 B
- US 9592853 B

- WO 2021153366 A1
- US 8946342 B
- JP 2021163769 A